(19) Europäisches Patentamt
European Patent Office
Office européen des brevets

(11) Veröffentlichungsnummer: **0 214 546**
**A2**

(12) # EUROPÄISCHE PATENTANMELDUNG

(21) Anmeldenummer: 86111750.5

(22) Anmeldetag: 25.08.86

(51) Int. Cl.⁴: **A01N 43/50**, A01N 43/54

(30) Priorität: 05.09.85 JP 194919/85
05.09.85 JP 194920/85
05.09.85 JP 194921/85
06.09.85 JP 195980/85

(43) Veröffentlichungstag der Anmeldung:
18.03.87 Patentblatt 87/12

(84) Benannte Vertragsstaaten:
AT BE CH DE FR GB IT LI NL

(71) Anmelder: NIHON TOKUSHU NOYAKU SEIZO K.K.
No.4, 2-chome, Nihonbashi Honcho Chuo-ku
Tokyo 103(JP)

(72) Erfinder: Tsuboi, Shinichi
3-26-1, Hirayama
Hino-Shi Tokyo(JP)
Erfinder: Sasaki, Shoko
1-7-3, Higashi-Hirayama
Hino-Shi Tokyo(JP)
Erfinder: Hattori, Yumi
598, Kobiki-Cho
Hachioji-shi Tokyo(JP)

(74) Vertreter: Ernst, Hilmar, Dr.
Bayer AG Konzernverwaltung RP
Patentabteilung
D-5090 Leverkusen, Bayerwerk(DE)

(54) **Insektizide Zusammensetzung zur Verwendung in Landwirtschaft und Gartenbau.**

(57) Es werden neue Wirkstoff-Kombinationen hergestellt, die

(1) ein Nitromethylen-Derivat der Formel (I)

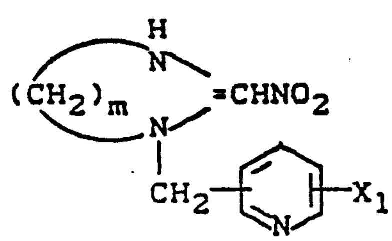

(I)

in der

X eine Niederalkyl-Gruppe, eine Niederalkoxy-Gruppe oder ein Halogen-Atom bezeichnet,

l 0, 1 oder 2 bezeichnet und

m 2 oder 3 bezeichnet

und

EP 0 214 546 A2

wenigstens eine aus den folgenden Gruppen (2) bis (5) ausgewählten insektiziden Verbindungen enthalten:

(2) Gruppe der Insektizide bestehend aus S,S'-2-Dimethylaminotrimethylen-bis(thiocarbamat), N,N-Dimethyl-1,2,3-trithian-5-ylamin, 2-t-Butylimino-3-isopropyl-5-phenyl-1,3,5-thiadiazinan-4-on, 1-(4-Chlorophenyl)-3-(2,6-difluorobenzoyl)harnstoff, N-(2,6-Difluorobenzoyl-N'-[3,5-dichloro-4-(3-chloro-5-trifluoromethyl-2-pyridiyloxy)-phenyl]harnstoff, 3-Phenoxybenzyl-2-(4-ethoxyphenyl)-2-methylpropylether, 1-(4-Trifluoromethoxyphenyl)-3-(2-chlorobenzoyl)harnstoff, 1-[4-(2-Dichloro-1-difluoroethoxy)phenyl] -3(2-chloro benzoyl)harnstoff, 1-(4-Trifluorophenyl)-3-(2,6-difluorobenzyol)-harnstoff, 1-(2,4-Difluoro-3,5-dichlorophenyl)-3-(2,6-diflurobenzoyl)harnstoff und N-[6-(2,2,3-Trifluoro-3-chloro-benzodioxin-(1,4))]-N'-(2,6-difluorobenzoyl)-harnstoff;

(3) Gruppe der Carbonsäureester der folgenden Formel

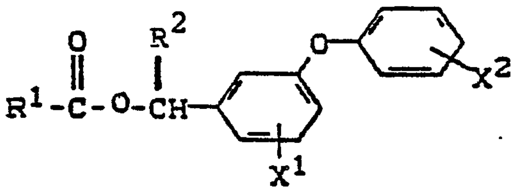

(II)

in der $R^1$, $R^2$, $X^1$ und $X^2$ die im Anmeldungstext angegebene Bedeutung besitzen;

(4) Gruppe der Carbamate der folgenden Formel

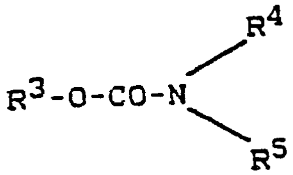

(III)

in der $R^3$, $R^4$ und $R^5$ die im Anmledungstext angegebenen Bedeutung besitzen;

(5) Gruppe der Organophosphatester der folgenden Formel

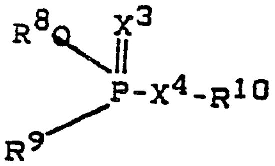

(IV)

in der $X^3$, $X^4$, $R^8$, $R^9$ und $R^{10}$ die im Anmeldungstext angebebene Bedeutung besitzen.

Die neuen Wirkstoffkombinationen zeigen eine starke synergistische Steigerung der insektiziden Wirksamkeit.

# Insektizide Zusammensetzung zur Verwendung in Landwirtschaft und Gartenbau

Die vorliegende Erfindung betrifft neue insektizide, synergistische, aktive Substanz-Kombinationen bekannter Nitromethylen-Derivate und bekannter Insektizide.

Nitromethylen-Derivate und ihre Verwendung als Insektizide sind bereits von der Anmelderin der vorliegenden Anmeldung offenbart (JP-Patentanmeldungen 20620/1984, 72966/1984 und 132943/1984).

Es ist bereits offenbart, daß die folgenden Insektizide insektizide Aktivität besitzen:

S,S'-2-Dimethylaminotrimethylen-bis(thiocarbamat), N,N-Dimethyl-1,2,3-trithian-4-ylamin, 2-t-Butylimino-3-isopropyl-5-phenyl-1,3,5-thiadiazinan-4-on und 1-(4-Chlorophenyl)-3-(2,6-difluorobenzoyl)harnstoff - (The Pesticide Manual, 7. Auflage, 1983, veröffentlicht von dem British Crop Protection Council),

N-(2,6-Difluorbenzoyl)-N'-[3,5-dichloro-4-(3-chloro-5-trifluoromethyl-2-pyridyloxy)phenyl]harnstoff (JP-Patentveröffentlichung 53786/1982) sowie 3-Phenoxybenzyl-2-(4-ethoxyphenyl)-2-methylpropylether (JP-OS 72928/1982.

Die Aktivitäten dieser bekannten insektiziden Verbindungen sind jedoch nicht in vollem Umfang zufriedenstellend, insbesondere dann nicht, wenn die Konzentrationen dieser aktiven Verbindungen niedrig sind und wenn sie nur in kleinen Mengen eingesetzt werden.

Es ist weiterhin bereits offenbart, daß beispielsweise die folgenden Carbonsäureester insektizide Aktivität aufweisen:

α-Cyano-5-phenoxy-4-fluorobenzyl-3-(2,2-dichlorovinyl)-2,2-dimethylcyclopropancarboxylat (JP-Patentveröffentlichung 57025/1982),

(RS)-α-Cyano-3-phenoxybenzyl(Z)-(1RS,3RS)-(2-chloro-3,3,3-trifluoropropenyl)-2,2-dimethylcyclopropancarboxylat, (RS)-α-Cyano-3-phenoxybenzyl-2,2,3,3-tetramethylcyclopropancarboxylat, (RS)-α-Cyano-3-phenoxybenzyl-(RS)-2-(4-chlorophenyl)-3-methylbutyrat und α-Cyano-3-phenoxybenzyl-1-p-ethoxyphenyl-2,2-dichlorocyclopropan-1-carboxylat (siehe The Pesticide Manual, 7. Auflage, 1983, veröffentlicht von dem British Crop Protection Council).

Die Aktivitäten dieser bekannten insektiziden Verbindungen sind jedoch nicht in vollem Umfang zufriedenstellend, insbesondere dann nicht, wenn ihre Konzentrationen als aktive Verbindungen niedrig sind oder wenn sie nur in kleinen Mengen eingesetzt werden.

Es ist weiterhin bereits offenbart, daß beispielsweise die folgenden Carbamate insektizide Aktivität aufweisen:

2-Isopropoxyphenyl-methylcarbamat, 2-sec-Butylphenylmethylcarbamat, m-Tolyl-methylcarbamat, 3,4,-Xylylmethylcarbamat, 2,3-Dihydro-2,2-dimethylbenzofuran-7-yl-methylcarbamat, α-Ethylthio-o-tolyl-methylcarbamat und 2-Dimethylamino-5,6-dimethylcarbamat (siehe The Pesticide Manual, 7. Auflage, 1983, veröffentlicht von dem British Crop Protection Council).

Die Aktivitäten dieser bekannten Carbarmate sind jedoch nicht im notwendigen Maße zufriedenstellend, wenn ihre Konzentrationen niedrig sind oder wenn sie nur in kleinen Mengen eingesetzt werden. Darüber hinaus haben als Folge der mehrjährigen Anwendung dieser Insektizide einige Insekten gegen einige dieser Insektizide Resistenz erworben, und es ist sehr schwierig geworden, diese Insekten zu bekämpfen und unter Kontrolle zu halten.

Es ist weiterhin bereits offenbart, daß beispielsweise die folgenden Organophosphatester insektizide Aktivität aufweisen:

O-Ethyl-O-4-methylthiophenyl-S-propyl-phosphorodithioat, O-2,4-Dichlorophenyl-O-ethyl-S-propyl-phosphorodithioat, O,O-Diethyl-O-5-phenylisoxazol-3-yl-phosphorothioat, 2,3-Dihydro-3-oxo-2-phenyl-6-pyridazinyl-diethylphosphorothioat, O,S-Dimethyl-acetylphosphoramidothioat, O,O-Diethyl-S-2-ethylthioethyl-phosphorodithioat und O,O-Dimethyl-S-2-(1-methylcarbamoylethylthio)-ethylphosphorothioat (siehe The Pesticide Manual, 7. Auflage, 1983, veröffentlicht von dem British Crop Protection Council).

Die Aktivitäten dieser bekannten Organophosphate sind jedoch nicht im notwendigen Maße zufriedenstellend, wenn ihre Konzentrationen niedrig sind oder wenn sie nur in kleinen Mengen eingesetzt werden. Weiterhin haben als Folge der mehrjährigen Anwendung dieser Insektizide einige Insekten gegen einige dieser Chemikalien Resistenz erworben, und es ist sehr schwierig geworden, diese Insekten zu bekämpfen und unter Kontrolle zu halten.

Es wurde gefunden, daß neue aktive Substanz-Kombinationen aus

(1) einem Nitromethylen-Derivat der Formel (I)

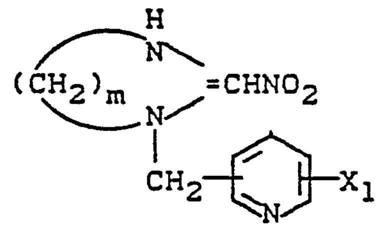

(I)

in der

X eine Niederalkyl-Gruppe, eine Niederalkoxy-Gruppe oder ein Halogen-Atom bezeichnet,

l 0, 1 oder 2 bezeichnet und

m 2 oder 3 bezeichnet,

und

wenigstens einer aus den folgenden Gruppen (2) bis (5) ausgewählten insektiziden Verbindung

eine durch synergistische Wirkungen bedingte herausragende insektizide Aktivität besitzen:

(2) Gruppe der Insektizide bestehend aus S,S'-2-Dimethylaminotrimethylen-bis(thiocarbamat), N,N-Dimethyl-1,2,3,trithian-5-ylamin, 2-t-Butylimino-3-isopropyl-5-phenyl-1,3,5-thiadiazinan-4-on, 1-(4-Chlorophenyl)-3-(2,6-difluorobenzoyl)harnstoff, N-(2,6-Difluorobenzoyl-N'-[3,5-dichloro-4-(3-chloro-5-trifluoromethyl-2-pyridyloxy)phenyl]harnstoff, 3-Phenoxybenzyl-2-(4-ethoxyphenyl)-2-methylpropylether, 1-(4-Trifluoromethoxyphenyl)-3-(2-chlorobenzoyl)harnstoff, 1-[4-(2-Dichloro-1-difluoroethoxy)phenyl]-3-(2-chlorobenzoyl)harnstoff, 1-(4-Trifluorophenyl)-3-(2,6-difluorobenzoyl)-harnstoff, 1-(2,4-Difluoro-3,5-dichlorophenyl)-3-(2,6-difluorobenzoyl)harnstoff und N-[6-(2,2,3,Trifluoro-3-chloro-benzodioxin-(1,4))]-N'-(2,6-difluorobenzoyl)harnstoff;

(3) Gruppe der Carbonsäureester der folgenden Formel

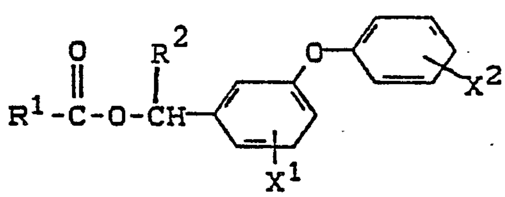

(II)

in der

$R^1$ eine substituierte Niederalkyl-Gruppe oder eine substituierte Cyclopropyl-Gruppe bezeichnet,

$R^2$ ein Wasserstoff-Atom oder CN bezeichnet und

$X^1$ und $X^2$ jeweils ein Wasserstoff-oder Halogen-Atom bezeichnet;

(4) Gruppe der Carbamate der folgenden Formel

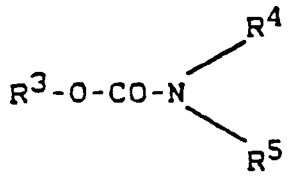

(III)

in der

$R^3$ eine substituierte oder unsubstituierte Aryl-Gruppe, heterocyclische Gruppe oder Oxim-Gruppe bezeichnet,

$R^4$ ein Wasserstoff-Atom oder eine Niederalkyl-Gruppe bezeichnet und

$R^5$ eine Niederalkyl-Gruppe oder die Gruppe

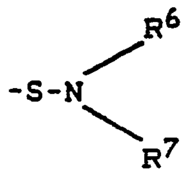

bezeichnet, in der

$R^6$ für eine Niederalkyl-Gruppe steht und

$R^7$ für eine Niederalkyl-Gruppe, eine Niederalkoxycarbonyl-Gruppe oder eine Niederalkoxycarbonylalkyl-Gruppe steht;

(5) Gruppe der Organophosphatester der folgenden Formel

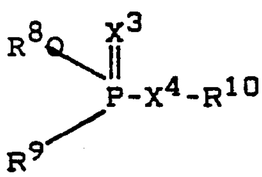

(IV)

in der

$X^3$ ein Sauerstoff-oder Schwefel-Atom bezeichnet,

$X^4$ ein Sauerstoff-oder Schwefel-Atom oder eine direkte Bindung zwischen dem Phosphor-Atom und $R^{10}$ in der Formel bezeichnet,

$R^8$ eine Niederalkyl-Gruppe bezeichnet,

$R^9$ eine Niederalkoxy-Gruppe, eine Niederalkylthio-Gruppe, eine Niederalkylcarbonylamid-Gruppe oder eine Phenyl-Gruppe bezeichnet und

$R^{10}$ eine substituierte oder unsubstituierte Niederalkyl-, Niederalkenyl-, Phenyl-oder Heteroaryl-Gruppe bezeichnet oder

$R^9$ und $R^{10}$ gemeinsam zusammen mit dem Phosphor-Atom und $X^4$ in der Formel einen Phosphorin-Ring bezeichnen.

Überraschenderweise ist die insektizide Aktivität der aktiven Substanz-Kombinationen gemäß der Erfindung wesentlich größer als die Summe der Effekte der einzelnen aktiven Substanzen. Demgemäß liegt eine echte synergistische Wirkung vor.

Durch die Anwendung der erfindungsgemäßen aktiven Substanz-Kombinationen kann man eine kooperative und synergistische Wirkung gegen Reisfeld-Schädlinge wie Wanzen der Ordnung Hemiptera (z.B. Weißrücken-Laternenträger) und Reisblattwickler der Ordnung Lepidoptera sowie Schädlinge an Garten-Nutzpflanzen, darunter auch Früchten und Gemüse, wie Kohlschaben, Kohlmotten und Schleiermotten mit niedrigeren Konzentrationen als denjenigen erzielen, in denen die aktiven Verbindungen einzeln zur Anwendung kommen, und weiterhin läßt sich eine Rückstandswirkung nachweisen.

Aus diesem Grunde bietet die insektizide Zusammensetzung der vorliegenden Erfindung einen technischen Vorteil, der sehr wirkungsvoll beim Anbau land-und gartenwirtschaftlicher Nutzpflanzen ist und von herausragender wirtschaftlicher Nützlichkeit und Anwendbarkeit ist.

Die in den erfindungsgemäßen aktiven Substanz-Kombinationen verwendeten Nitromethylen-Derivate der allge meinen Formel (I) sind durch die folgende Formel definiert

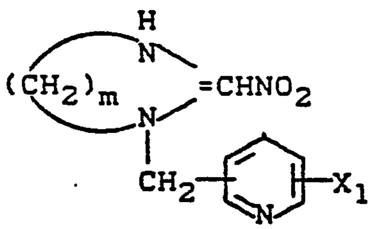

(I)

in der

X eine Niederalkyl-Gruppe, eine Niederalkoxy-Gruppe oder ein Halogen-Atom bezeichnet,

I 0, 1 oder 2 bezeichnet und

m 2 oder 3 bezeichnet.

In der Formel (I) bezeichnen vorzugsweise X eine Methyl-Gruppe, eine Methoxy-Gruppe, ein Chlor-Atom, ein Brom-Atom oder ein Fluor-Atom, I 1 oder 2 und m 2 oder 3, und die Bindungs-Position an dem Pyridin-Ring ist die 3-(oder 5-) -Stellung.

Die Nitromethylen-Derivat der allgemeinen Formel (I) können auch in Form von Salzen vorkommen. Beispiele für diese Salze umfassen Salze anorganischer Säuren, Sulfonsäure-Salze, Salze organischer Säuren und Metall-Salze, vorzugsweise Hydrochloride, p-Toluolsulfonate, Kupfer(II)-acetate und Succinate. Dementsprechend bezieht sich die Bezeichnung Nitromethylen-Derivate der Formel (I), wie sie hier verwendet wird, auch auf deren Salze.

Zu Beispielen für die Nitromethylen-Derivate der Formel (I), die in der erfindungsgemäßen aktiven Substanz-Kombination verwendet werden zählen

1-(3-Pyridylmethyl)-2-(nitromethylen)-tetrahydropyrimidin,

1-(2-Methyl-5-pyridylmethyl)-2-(nitromethylen)-imidazolidin,

1-(2-Methyl-5-pyridylmethyl)-2-(nitromethylen)-tetrahydropyrimidin,

1-(2-Methoxy-5-pyridylmethyl)-2-(nitromethylen)-imidazolidin,

1-(2-Methoxy-5-pyridylmethyl)-2-(nitromethylen)-tetrahydropyrimidin,

1-(2-Chloro-5-pyridylmethyl)-2-(nitromethylen)-imidazolidin,

1-(2-Chloro-5-pyridylmethyl)-2-(nitromethylen)-tetrahydropyrimidin,

1-(2-Fluoro-5-pyridylmethyl)-2-(nitromethylen)-imidazolidin,

1-(2-Fluoro-5-pyridylmethyl)-2-(nitromethylen)-tetrahydropyrimidin,

1-(2-Bromo-5-pyridylmethyl)-2-(nitromethylen)-imidazolidin,

1-(2-Bromo-5-pyridylmethyl)-2-(nitromethylen)-tetrahydropyrimidin,

1-(5-Chloro-2-pyridylmethyl)-2-(nitromethylen)-imidazolidin,

1-(5-Chloro-2-pyridylmethyl)-2-(nitromethylen)-tetrahydropyrimidin,

1-(2,4-Dichloro-5-pyridylmethyl)-2-(nitromethylen)-tetrahydropyrimidin,

1-(2,4-Dibromo-5-pyridylmethyl)-2-(nitromethylen)-imidazolidin,

1-(2,3-Dichloro-5-pyridylmethyl)-2-(nitromethylen)-imidazolidin,

1-(3-Pyridylmethyl)-2-(nitromethylen)-tetrahydropyrimidin-hydrochlorid,

1-(2-Methyl-5-pyridylmethyl)-2-(nitromethylen)-

tetrahydropyrimidin-p-toluolsulfonat,

1-(2-Methoxy-5-pyridylmethyl)-2-(nitromethylen)-tetrahydropyrimidin-succinat,

1-(2-Chloro-5-pyridylmethyl)-2-(nitromethylen)-imidazolidin-hydrochlorid,

1-(2-Fluoro-5-pyridylmethyl)-2-(nitromethylen)-tetrahydropyrimidin-Kupfer(II)-acetat,

1-(2-Bromo-5-pyridylmethyl)-2-(nitromethylen)-imidazolidin-succinat und

1-(2,4-Dichloro-5-pyridylmethyl)-2-(nitromethylen)-tetrahydropyrimidin-p-toluolsulfonat.

Die insektizide Aktivität der Nitromethylen-Derivate der allgemeinen Formel (I) ist in den JP-Patentanmeldungen 20620/1984, 72966/1984 und 132943/1984 beschrieben.

Beispiele für die bekannten Insektizide der aus der vorstehenden Gruppe (2) ausgewählten anderen Insektizide sind die folgenden:

S,S'-2-Dimethylaminotrimethylen-bis(thiocarbamat) (Cartap),

N,N-Dimethyl-1,2,3-trithian-5-ylamin (Thiocyclam),
2-t-Butylimino-3-isopropyl-5-phenyl-1,3,5-thiadiazinan-4-on (Buprofezin),

1-(4-Chlorophenyl)-3-(2,6-difluorobenzoyl)harnstoff - (Diflubenzuron)

(The Pesticide Manual, 7. Auflage, 1983, veröffentlicht von dem British Crop Protection Council).

N-(2,6-Difluorobenzoyl-N'-[3,5-dichloro-4-(3-chloro-5-trifluoromethyl-2-pyridyloxy)phenyl]harnstoff (JP-Patentveröffentlichung 53786 (1982) und

3-Phenoxybenzyl-2-(4-ethoxyphenyl)-2-methylpropylether (JP-OS 72928/1982).

Bevorzugte Carbonsäureester (Gruppe (3)) der Formel (II), die in den erfindungsgemäßen aktiven Substanz-Kombinationen eingesetzt werden, sind diejenigen Verbindungen der Formel (II), in denen

$R^1$ eine Alkyl-Gruppe bezeichnet, die durch eine Phenyl-Gruppe substituiert ist, die ihrerseits durch einen aus Halogen-Atom, Niederalkoxy-Gruppen und Niederhalogenoalkoxy-Gruppen ausgewählten Substituenten substituiert ist, und die Alkyl-Gruppe weiter durch eine Dichlorocyclopropan-Gruppe substituiert sein kann, oder

$R^1$ eine Alkyl-Gruppe bezeichnet, die durch eine Phenylamino-Gruppe substituiert ist, die ihrerseits durch ein Halogen-Atom und eine Halogenoalkyl-Gruppe substituiert sein kann, wobei die Halogenoalkyl-Gruppe vorzugzsweise eine Trifluoromethyl-Gruppe ist, oder

$R^1$ eine Cyclopropyl-Gruppe bezeichnet, die durch eine Alkyl-Gruppe mit 1 bis 3 Kohlenstoff-Atomen, vorzugsweise eine Methyl-Gruppe substituiert ist, oder eine Cyclopropyl-Gruppe bezeichnet, die durch eine Alkyl-Gruppe mit 1 bis 3 Kohlenstoff-Atomen, vorzugsweise eine Methyl-Gruppe, und eine Halogenoalkyl-Gruppe mit 2 bis 3 Kohlenstoff-Atomen substituiert ist,

$R^2$ ein Wasserstoff-Atom oder CN bezeichnet und

$X^1$ und $X^2$ jeweils ein Wasserstoff-Atom, ein Chlor-Atom oder ein Fluor-Atom bezeichnen, wobei vorzugsweise $X^1$ ein Wasserstoff-oder Fluor-Atom bezeichnet und $X^2$ ein Wasserstoff-Atom bezeichnet.

Zu Beispielen der Carbonsäureester der allgemeinen Formel (II) zählen

α-Cyano-5-phenoxy-4-fluorobenzyl-3-(2,2-dichlorovinyl)-2,2-dimethylcyclopropancarboxylat (Cyfluthrin),

3-Phenoxybenxyl-(1RS,3RS;1RS; 3SR)-3-(2,2-dichlorovinyl)-2,2-dimethylcyclopropancarboxylat (Permethrin),

(RS)-α-Cyano-3-phenoxybenzyl-(1RS;3RS;1RS;3SR)-3-(2,2-dichloro-vinyl)-2,2-dimethylcyclopropancarboxylat (Cypermethrin),

(S)-α-Cyano-3-phenoxybenzyl-(1R,3R)-3-(2,2-dibromovinyl)-2,2-dimethylcyclopropancarboxylat (Deltamethrin),

(RS)-α-Cyano-3-phenoxybenzyl(Z)-(1RS,3RS)-(2-chloro-3,3,3-trifluoropropenyl)-2,2-dimethylcyclopropancarboxylat (Cyhalothrin),

(RS)-α-Cyano-3-phenoxybenzyl-2,2,3,3-tetramethylcyclopropancarboxylat (Fenpropathrin),

(RS)-α-Cyano-3-phenoxybenzyl-(RS)-2-(4-chlorophenyl)-3-methylbutyrat (Fenvalerate),

(RS)-α-Cyano-3-phenoxybenzyl-(S)-2-(4-difluoromethoxyphenyl)-3-methylbutyrat (Flucythrinate),

$\alpha$-Cyano-3-phenoxybenzyl-1-p-ethoxyphenyl-2,2-dichlorocyclopropan-1-carboxylat und .

(RS)-$\alpha$-Cyano-3-phenoxybenzyl-N-(2-chloro-$\alpha$,$\alpha$,$\alpha$-trifluoro-p-tolyl)-D-valinat (Fluvalinate).

Die Carbonsäureester als eine Komponente der erfindungsgemäßen aktiven Substanz-Kombinationen sind bereits bekannt. Beispielsweise sind sie als Insektizide in The Pesticide Manual, 7. Auflage, 1983, veröffentlicht von dem British Crop Protection Council, beschrieben.

Bevorzugte Carbamate (Gruppe (4)) sind diejenigen Verbindungen der Formel (III), in denen

$R^3$ eine Phenyl-Gruppe bezeichnet, die durch eine oder zwei gleiche oder verschiedene Alkyl-Gruppen, Alkoxy-Gruppen mit 1 bis 4 Kohlenstoff-Atomen oder Ethylthiomethyl-Gruppen substituiert ist, oder

$R^3$ eine Naphthyl-Gruppe, eine Pyrimidinyl-Gruppe, die durch eine Dialkylamino-Gruppe mit 1 bis 3 Kohlenstoff-Atomen, vorzugsweise eine Dimethylamino-Gruppe, und zwei Alkyl-Gruppen mit 1 bis 4 Kohlenstoff-Atomen, vorzugsweise Methyl-Gruppen, substituiert ist, oder eine 2,3-Dihydrobenzofuranyl-oder -benzoxazolyl-Gruppe, die durch eine Alkyl-Gruppe mit 1 bis 4 Kohlenstoff-Atomen, vorzugsweise eine Methyl-Gruppe, substituiert ist, bezeichnet oder

$R^3$ eine Gruppe der allgemeinen Formel

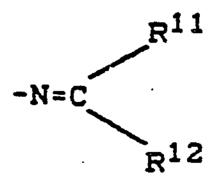

bezeichnet, in der

$R^{11}$ eine Alkyl-Gruppe mit 1 bis 4 Kohlenstoff-Atomen, vorzugsweise eine Methyl-Gruppe, bezeichnet und

$R^{12}$ eine Alkylthio-Gruppe mit 1 bis 4 Kohlenstoff-Atomen, vorzugsweise eine Methylthio-Gruppe, bezeichnet,

$R^4$ ein Wasserstoff-Atom oder eine Alkyl-Gruppe mit 1 bis 4 Kohlenstoff-Atomen bezeichnet, wobei vorzugsweise die Alkyl-Gruppe mit 1 bis 4 Kohlenstoff-Atomen $R^4$ Methyl bezeichnet, und

$R^5$ eine Alkyl-Gruppe mit 1 bis 4 Kohlenstoff-Atomen, vorzugsweise eine Methyl-Gruppe, oder eine Gruppe der Formel

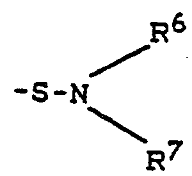

bezeichnet, in der

$R^6$ für eine Alkyl-Gruppe mit 1 bis 5 Kohlenstoff-Atomen steht und

$R^7$ für eine Alkyl-Gruppe, eine Alkoxycarbonyl-Gruppe oder eine Alkoxycarbonylalkyl-Gruppe steht, die jeweils 1 bis 5 Kohlenstoff-Atome umfassen.

Zu Beispielen für die Carbamate der allgemeinen Formel (III) zählen

2-Isopropoxyphenylmethylcarbamat (Propoxur),

o-Cumenylmethylcarbamat (Isoprocarb),

2-sec-Butylphenylmethylcarbamat (BPMC),

3,4-Xylylmethylcarbamat (Xylylcarb),

m-Tolylmethylcarbamat (Metolcarb),

3,5-Xylylmethylcarbamat (XMC),

$\alpha$-Ethylthio-o-tolylmethylcarbamat (Ethiofencarb),

1-Naphthylmethylcarbamat (Carbaryl),

2-Dimethylamino-5,6-dimethylpyrimidin-4-yl-dimethylcarbamat (Pirimicarb),

2,2-Dimethyl-1,3-benzodioxol-4-ylmethylcarbamat - (Bendiocarb);

2,3-Dihydro-2,2-dimethylbenzofuran-7-ylmethylcarbamat (Carbofuran),

Butyl-2,3-dihydro-2,2-dimethylbenzofuran-7-yl-N,N-dimethyl-N,N-thiodicarbamat (Furanthiocarb),

2,3-Dihydro-2,2-dimethylbenzofuran-7-yl-(dibutylaminosulfenyl) (methyl)carbamat (Carbosulfan) (siehe die JP-Patentveröffentlichung 39487/1983),

2,3-Dihydro-2,2-dimethylbenzofuran-7-yl-N-(N-isopropyl-N-ethoxycarbonylethylaminosulfenyl)-N-methylcarbamat (Aminosulfulan) (siehe die JP-OS 200377/1982) und

S-Methyl-N-(methylcarbamoyloxy)thioacetimidat - (Methomyl).

Die als eine Komponente der erfindungsgemäßen aktiven Substanz-Kombinationen eingesetzten Carbamate sind bereits bekannt. Beispielsweise sind sie in The Pesticide Manual, 7. Auflage, 1983, veröffentlicht von dem British Crop Protection Council, beschrieben.

Bevorzugte Organophosphatester (Gruppe (5)) sind diejenigen Verbindungen der Formel (IV), in denen

$R^8$ eine Alkyl-Gruppe mit 1 bis 4 Kohlenstoff-Atomen bezeichnet,

$R^9$ eine Alkoxy-Gruppe, eine Alkylthio-Gruppe oder eine Alkylcarbonylamid-Gruppe, die jeweils 1 bis 4 Kohlenstoff-Atome umfassen oder eine Phenyl-Gruppe bezeichnet,

$R^{10}$ eine durch einen oder zwei aus Halogen-Atomen und Methyl-, Methylthio-, Nitro-und Cyano-Gruppen ausgewählte Substituenten substituierte Phenyl-Gruppe bezeichnet oder

$R^{10}$ eine Alkyl-Gruppe mit 1 bis 3 Kohlenstoff-Atomen bezeichnet, die gegebenenfalls durch ein Halogen-Atom, eine Alkylthio-(oder -sulfinyl-) - Gruppe mit 2 bis 3 Kohlenstoff-Atomen, eine Phenyl-Gruppe, eine Alkoxycarbonyl-Gruppe mit 1 bis 4 Kohlenstoff-Atomen, eine Alkylcarbamoyl-Gruppe mit 1 bis 4 Kohlenstoff-Atomen, eine Alkylcarbamoylalkyl-$(C_{1-2})$thioalkyl$(C_{1-2})$-Gruppe oder eine Alkoxycarbonyl-N-methylcarbamoyl-Gruppe mit 1 bis 4 Kohlenstoff-Atomen, eine halogen-substituierte Benzoxazol-Gruppe oder eine Alkyl-Gruppe mit 1 bis 3 Kohlenstoff-Atomen, die durch ein Halogen-Atom und eine Phthalimid-Gruppe substituiert ist, oder

$R^{10}$ eine Alkenyl-Gruppe mit 2 bis 3 Kohlenstoff-Atomen bezeichnet, die durch ein oder zwei aus Halogen-Atomen, einer halogen-substituierten Phenyl-Gruppe und einer Alkylcarbamoyl-Gruppe ausgewählte Substituenten substituiert ist, oder

$R^{10}$ eine Pyridinyl-, Pyrimidinyl-, Pyridazinyl-, Chinoxalinyl, Isoxazolyl-oder Oxo-1,3,4-thiadiazolyl-Gruppe bezeichnet, die durch ein bis drei gleiche oder verschiedene Alkyl-Gruppen, Alkoxy-Gruppen, Dialkylamino-Gruppen, die sämtlich jeweils 1 bis 4 Kohlenstoff-Atome umfassen, Halogen-Atome oder Phenyl-Gruppen substituiert sind, oder

$R^9$ und $R^{10}$ zusammen einen Benzodioxaphosphorin-Ring bezeichnen oder

in dem Fall, in dem $X^4$ eine direkte Bindung zwischen dem Phosphor-Atom und $R^{10}$ bezeichnet,

$$R^{10} \text{ die Gruppe } \underset{\displaystyle OH}{CHCCl_3}$$

bezeichnet.

Beispiele für die Organophosphate der allgemeinen Formel (IV) sind

O,O-Dimethyl-O-4-methylthio-m-tolyl-phosphorothioat (Fenthion),

O,O-Dimethyl-O-4-nitro-m-tolyl-phosphorothioat - (Fenitrothion),

4-(Methylthio)phenyl-dipropyl-phosphat - (Propaphos), O-4-Cyanophenyl-O,O-dimethyl-phosphorothioat (Cyanophos),

O-2,4-Dichlorophenyl-O-ethyl-S-propyl-phosphorodithioat (Prothiofos),

O-Ethyl-O-4-methylthiophenyl-S-propyl-phosphorodithioat (Sulprofos),

O-4-Bromo-2-chlorophenyl-O-ethyl-S-propyl-phosphorothioat (Profenofos),

O-Ethyl-O-4-nitrophenyl-phenylphosphonothioat - (EPN), O-4-Cyanophenyl-O-ethyl-phenylphosphonothioat (Cyanofenphos),

O,S-Dimethyl-acetylphosphoramidothioat (Acephat), S-2-Ethylsulfinyl-1-methylethyl-O,O-dimethylphosphorothioat (Oxydeprofos),

O,O-Diethyl-S-2-ethylthioethyl-phosphorodithioat (Disulfoton),

S-2-Ethylthioethyl-O,O-dimethylphosphorodithioat (Thiometon),

S-α-Ethoxycarbonylbenzyl-O,O-dimethylphosphorodithioat (Phenthoate),

S-1,2-Bis(ethoxycarbonyl)ethyl-O,O-dimethylphosphorodithioat (Malathion),

O,O-Dimethyl-S-methylcarbamoylmethyl-phosphorodithioat (Dimethoate),

O,O-Dimethyl-S-S-(1-methylcarbamoylethylthio)-ethylphosphorothioat (Vamidothion),

S-(N-Ethoxycarbonyl-N-methylcarbamoylmethyl)-O,O-diethylphosphorodithioat (Mecarbam),

Dimethyl-2,2,2-trichloro-1-hydroxyethylphosphonat (Trichlorphon),

1,2-Dibromo-2,2-dichloroethyl-dimethylphosphat (Naled),

2,2-Dichlorovinyl-dimethylphosphat (Dichlorvos),

2-Chloro-1-(2,4-dichlorophenyl)vinyl-diethylphosphat (Chlorofenvinphos),

(Z)-2-Chloro-1-(2,4,5-trichlorophenyl)-vinyldimethylphosphat (Tetrachlorvinphos),

Dimethyl-(E)-1-methyl-2-(methylcarbamoyl)-vinylphosphat (Monocrotophos),

S-6-Chloro-2,3-dihydro-2-oxobenzoxazol-3-ylmethyl-O,O-diethylphosphorodithioat (Phosalone),

S-2-Chloro-1-phthalimidoethyl-O,O-diethylphosphorodithioat (Dialifos),

O,O-Dimethyl-O-3,5,6-trichloro-2-pyridylphosphorthioat (Chlorpyrifos-methyl),

O,O-Diethyl-O-3,5,6-trichloro-2-pyridylphosphorthioat (Chlorpyrifos),

O-2-Diethylamino-6-methylpyrimidin-4-yl-O,O-dimethylphosphorothioat (Pirimophos-methyl),

O,O-Diethyl-O-2-isopropyl-6-methylpyrimidin-4-ylphosphorothioat (Diazinon),

O-6-ethoxy-2-ethylpyrimidin-4-yl-O,O-dimethyl-phosphorothioat (Etrimfos-),

2,3-Dihydro-3-oxo-2-phenyl-6-pyridazinyl-diethylphosphorothioat (Pyridaphenthion),

O,O-Diethyl-O-chinoxalin-2-ylphosphorothioat (Quinalphos),

O,O-Diethyl-O-5-phenylisoxazol-3-yl-phosphorothioat (Isoxathion),

S-2,3-Dihydro-5-methoxy-2-oxo-1,3,4-thiadiazol-3-yl-methyl-O,O-dimethylphosphorodithioat (Methidathion) und

2-Methoxy-4H-1,3,2$^5$-benzodioxaphosphorin-2-sulfid (Salithion).

Die Organophosphatester, eine Komponente der erfindungsgemäßen aktiven Substanz-Kombinationen, sind bereits bekannt und sind beispielsweise in The Pesticide Manual, 7. Auflage, 1983 - (veröffentlicht von dem British Crop Protection Council) als Insektizide beschrieben.

Unter den oben bezeichneten Organophosphaten werden zum Beispiel Quinalphos, Fenthion, Sulprofos, Phenthoate, Fenitrothion, Diazinon, Isoxathion, Pyridaphenthion, Trichlorphon, Chlorpyriphos-methyl, Malathion, Monocrotophos, Propaphos, EPN, Etrimfos und Tetrachlorvinphos vorzugsweise zur Bekämpfung von Schädlingen der Ordnung Lepidoptera in Reisfeldern, etwa des Reisblattwicklers (Cnaphalocrocis medinalis) und des Reishalmbohrers (Chilo suppressalis), eingesetzt.

Prothiofos, Sulprofos, Dichlorovos, Trichlorphon, Cyanophos, Pyrimophos-methyl, Chloropyrifos, Dimethoat, Phosalone, Methidathion, Chlorofenvinphos, Acephat, Salithion, Dialifos, Mecarbam, Profenofos, Naled, Phenthoate, Fenitrothion, Diazinon, Isoxathion, Malathion, EPN und Cyanofenphos werden zum Beispiel vorzugsweise zur Bekämpfung von Schädlingen der Ordnung Lepidoptera im Gartenbau, etwa der Kohlschabe, Kohlmotte bzw. Schleiermotte (Plutella maculipennis), der Kohleule bzw. des Herzwurms (Mamestra brassicae) und von Blattwicklern, angewandt.

Weiterhin werden zum Beispiel Disulfoton, Vamidothion, Thiometon und Oxydeprofos vorzugsweise im Gartenbau, insbesondere zur Bekämpfung von Schädlingen der Ordnung Hemiptera wie Blattläusen, einschließlich der Blattläuse auf Pfirsichbäumen, Baumwolle und Apfelbäumen, eingesetzt.

Die Gewichtsverhältnisse der Gruppen der aktiven Substanzen in den aktiven Substanz-Kombinationen können innerhalb relativ breiter Bereiche variiert werden. Im allgemeinen werden 0,05 bis 10 Gew.-Teile der aktiven Substanz der Gruppe (2) der aktiven Substanzen, vorzugsweise 0,1 bis 5 Gew.-Teile, auf 1 Gew.-Teil der aktiven Substanz der Gruppe (1) der aktiven Substanzen angewandt.

Weiterhin werden im allgemeinen 0,05 bis 10 Gew.-Teile der aktiven Substanz der Gruppe (3) der aktiven Substanzen (Carbonsäureester der Formel (II)), vorzugsweise 0,1 bis 5 Gew.-Teile, auf 1 Gew.-Teil der aktiven Substanz der Gruppe (1) der aktiven Substanzen angewandt.

Weiterhin werden im allgemeinen 0,1 bis 20 Gew.-Teile der aktiven Substanz der Gruppe (4) der aktiven Substanzen (Carbamate der Formel - (III)), vorzugsweise 0,2 bis 15 Gew.-Teile, auf 1 Gew.-Teil der aktiven Substanz der Gruppe (1) der aktiven Substanzen angewandt.

Weiterhin werden im allgemeinen 0,05 bis 10 Gew.-Teile der aktiven Substanz der Gruppe (5) der aktiven Substanzen (Organophosphatester der Formel (IV)), vorzugsweise 0,1 bis 5 Gew.-Teile, auf 1 Gew.-Teil der aktiven Substanz der Gruppe - (1) der aktiven Substanzen angewandt.

Die aktiven Substanz-Kombinationen gemäß der Erfindung zeigen eine ausgezeichnete insektizide Aktivität. Dementsprechend können sie als Insektizide mittels Aufbringen auf Laub, Unterwasser-oder Wasseroberflächen-Anwendung, Aufbringen auf den Boden, Boden-Mischbehandlung, Aufbringen auf einen Pflanzen-Setzkasten etc. zur Einwirkung gebracht werden.

Die aktiven Substanz-Kombinationen gemäß der Erfindung zeigen starke insektizide Aktivität und können aus diesem Grunde als Insektizide verwendet werden. Die erfindungsgemäßen aktiven Substanz-Kombinationen weisen keine Phytotoxizität gegen Kulturpflanzen auf, zeigen nur eine niedrige Toxizität gegenüber warmblütigen Tieren und können zur genauen Bekämpfung von Schädlingen, insbesondere von Insekten, in der Land-und Forstwirtschaft sowie in gelagerten Ernteerträgen und Produkten eingesetzt werden. Sie sind aktiv gegen empfindliche und resistente Species und gegen alle oder einige Entwicklungsstadien.

Beispielsweise können die aktiven Substanz-Kombinationen gemäß der Erfindung in wirksamer Weise zur Bekämpfung von Reisfeld-Schädlingen eingesetzt werden, so zum Beispiel gegen Wanzen und Laternenträger der Ordnung Hemiptera (etwa den braunen Laternenträger, den Weißrücken-Laternenträger und den kleineren braunen Laternenträger) und Blatthüpfer, Larven von Insekten der Ordnung Lepidoptera (Reishalmbohrer, Reisblattwickler etc.) und den Reiskäfer (Reisrüßler) der Ordnung Coleoptera, sowie auch gegen Schädlinge auf Gartenbau-Nutzpflanzen wie Obstbäumen und Gemüse, beispielsweise Larven von Insekten der Ordnung Lepidoptera (Kohlschabe, Kohlmotte bzw. Schleiermotte, Heerwurm, Blattwickler etc.) und Schildläuse der Ordnung Hemiptera.

Die aktiven Substanz-Kombinationen gemäß der Erfindung zeigen potente insektizide Effekte. Sie können aus diesem Grunde gegen die folgenden Schädlinge eingesetzt werden.

Insekten der Ordnung Coleoptera

Callosobruchus chinensis,

Sitophilus zeamais,

Tribolium castaneum,

Epilachna vigintioctomaculata,

Agriotes fuscicollis,

Anomala rufocuprea,

Leptinotarsa decemkineata,

Diabrotica spp.,

Monochamus alternatus,

Lissorhoptrus oryzophilus und

Lyctus brunneus;

Insekten der Ornung Lepidoptera

Lymantria dispar,

Malacosoma neustria,

Pieris rapae,

Spodoptera litura,

Mamestra brassicae,

Chilo suppressalis,

Pyrausta nubilalis,

Ephestia cautella,

Adoxophyes orana,

Carpocapsa pomonella,

Agrotis fucosa,

Galleria mellonella,

Plutella maculipennis,

Heliothis virscens und

Phyllocnistis citrella;

Insekten der Ordnung Hemiptera

Nephotettix cincticeps,

Nilaparvata lugens,

Laodelphax striatellus,

Sogatella furcifera,

Pseudococcus comstocki

Unaspis yanonensis,

Myzus persicae,

Aphis pomi,

Aphis gossypii

Ropalosiphum pseudobrassicae,

Stephanitis nashi,

Nezara spp.,

Trialeurodes vaporariorum und

Psylla spp.;

Insekten der Ordnung Orthoptera

Gryllotalpa africana und

Locusta migratoria migratoriodes;

Die aktiven Substanz-Kombinationen können in gebräuchliche Formulierungen überführt werden, etwa Lösungen, Emulsionen, Suspensionen, Pulver, Schäume, Pasten, Granulat, Aerosol, mit der aktiven Verbindung imprägnierte natürliche oder synthetische Stoffe, sehr feine Kapseln in polymeren Substanzen, Überzugsmassen zur Verwendung auf Saatgut (Beizmittel) sowie Formulierungen für den Einsatz mit Verbrennungseinrichtungen wie Räucherpatronen, Räucherdosen und Räucherschlangen sowie für die kalte Vernebelung und die warme Vernebelung nach dem Ultra-Low-Volume-Verfahren.

Diese Formulierungen können in bekannter Weise hergestellt werden, beispielsweise durch Vermischen der aktiven Substanz-Kombinationen mit Streckmitteln, das heißt mit flüssigen oder verflüssigten gasförmigen oder festen Verdünnungsmitteln oder Trägern, gegebenenfalls unter Verwendung grenzflächenaktiver Mittel, das heißt von Emulgatoren und/oder Dispergiermitteln und/oder schaumbildenden Mitteln. Bei Verwendung von Wasser als Streckmittel können organische Lösungsmittel beispielsweise als Hilfslösungsmittel verwendet werden.

Als flüssige Lösungsmittel, Verdünnungsmittel oder Träger hauptsächlich geeignet sind aromatische Kohlenwasserstoffe wie Xylol, Toluol oder Alkylnaphthaline, chlorierte aromatische oder chlorierte aliphatische Kohlenwasserstoffe wie Chlorbenzole, Choroethylene oder Methylenchlorid, aliphatische Kohlenwasserstoffe wie Cyclohexan oder Paraffine, beispielsweise Mineralöl-Fraktionen, Alkohole wie Butanol oder Glycol sowie deren Ether und Ester, Ketone wie Aceton, Methylethylketon, Methylisobutylketon oder Cyclohexanon oder stark polare Lösungsmittel wie Dimethylformamid und Dimethylsulfoxid sowie auch Wasser.

Unter verflüssigten gasförmigen Verdünnungsmitteln oder Trägern sind Flüssigkeiten zu verstehen, die bei normaler Temperatur und normalem Druck gasförmig wären, beispielsweise Aerosol-Treibmittel wie halogenierte Kohlenwasserstoffe sowie Butan, Propan, Stickstoff und Kohlenstoffdioxid.

Als feste Träger verwendbar sind gemahlene natürliche Minerale wie Kaoline, Tone, Talkum, Kreide, Quarz, Attapulgit, Montmorillonit oder Diatomeenerde und gemahlene synthetische Minerale wie hochdisperse Kieselsäure, Aluminiumoxid und Silicate. Als feste Träger für Granulat können zerkleinerte und fraktionierte Natursteinmaterialien verwendet werden, etwa Calcit, Marmor, Bimsstein, Sepiolith und Dolomit sowie synthetisches Granulat aus anorganischem und organischen Mehlen und Granulat aus organischem Material wie Sägemehl, Kokosnußschalen, Maiskolben und Tabakstengel.

Als emulgierende und/oder schaumbildende Mittel können nicht-ionische und anionische Emulgatoren wie Polyoxyethylenfettsäureester, Polyoxyethylenfettalkoholether, beispielsweise Alkylarylpolyglycol-Ether, Alkylsulfonate, Alkylsulfate, Arylsulfonate sowie Albumin-Hydrolyseprodukte verwendet werden. Zu Dispergiermitteln zählen beispielsweise Ligninsulfit-Ablaugen und Methylcellulose.

Haftmittel wie Carboxymethylcellulose und natürliche und synthetische Polymere in Form von Pulvern, Granulat oder Latices wie Gummi arabicum, Polyvinylalkohol und Polyvinylacetat können bei der Formulierung verwendet werden.

Es ist möglich, farbgebende Mittel, etwa anorganische Pigmente wie beispielsweise Eisenoxid, Titanoxid und Preußisch Blau und organische Farbstoffe wie Alizarin-Farbstoffe, Azo-Farbstoffe oder Metallphthalocyanin-Farbstoffe, sowie Spuren-Nährstoffe wie Salze von Eisen, Mangan, Bor, Kupfer, Cobalt, Molybdän und Zink zu verwenden.

Die Formulierungen enthalten im allgemeinen 0,1 bis 95 Gew.-%, vorzugsweise 0,5 bis 90 Gew.-% der aktiven Verbindung.

Die aktiven Substanz-Kombinationen gemäß der Erfindung können in ihren handelsüblichen Formulierungen oder den aus diesen Formulierungen hergestellten Anwendungsformen im Gemisch mit anderen aktiven Verbindungen vorliegen, etwa mit Insektiziden, Ködern, Sterilisationsmitteln, Akariziden, Nematiziden, Fungiziden, Wachstumsregulatoren oder Herbiziden. Zu den Insektiziden gehören beispielsweise Phosphate, Carbamate, Carboxylate, chlorierte Kohlenwasserstoffe, Phenylharnstoffe und von Mikroorganismen erzeugte Substanzen.

Die aktiven Substanzen-Kombinationen gemäß der vorliegenden Erfindung können weiterhin in ihren handelsüblichen Formulierungen oder den aus diesen Formulierungen hergestellten Anwendungsformen im Gemisch mit synergistischen Mitteln vorliegen. Synergistiche Mittel sind Verbindungen, die die Wirkung der aktiven Verbindungen steigern, ohne daß es für das zugesetzte synergistische Mittel erforderlich ist, selbst aktiv zu sein.

Der Gehalt der aktiven Verbindung in den aus den im Handel erhältlichen Formulierungen hergestellten Anwendungsformen kann innerhalb weiter Grenzen variieren. Die Konzentration der aktiven Verbindung in den Anwendungsformen kann 0,00001 bis 100 Gew.-% betragen und liegt vorzugsweise zwischen 0,00004 und 1 Gew.-%.

Die Verbindungen werden in üblicher Weise in einer den Anwendungsformen angemessenen Form zur Anwendung gebracht.

Bei der Verwendung gegen Schädlinge in Produkt-Vorräten zeichnen sich die aktiven Substanz-Kombinationen durch eine hervorragende Rückstandswirkung auf Holz und Ton sowie eine gute Beständigkeit gegen Alkali auf gekalkten Unterlagen aus.

Die folgenden Beispiele erläutern dei vorliegende Erfindung im einzelnen. Es sei jedoch darauf hingewiesen, daß die vorliegende Erfindung nicht allein auf diese speziellen Beispiele beschränkt ist.

A) Biologische Beispiele für neue aktiven Substanz-Kombinationen aus (1) einem Nitromethylen-Derivat der Formel (I) und einer insektiziden Verbindung der Gruppe (2):

Beispiel 1

Test gegen Cnaphalocrosis

Herstellung einer Test-Chemikalie:

Lösungsmittel: 3 Gew.-Teile Xylol

Emulgator: 1 Gew.-Teil Polyoxyethylenalkylphenylether

Zur Herstellung einer Formulierung der aktiven Verbindungen wurde 1 Gew.-Teil der aktiven Verbindungen mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren

Drei Reis-Setzlinge von 15 cm Höhe wurden jeweils in Vinylharz-Töpfe von 9 cm Durchmesser gepflanzt. Zehn Tage nach dem Umpflanzen wurde eine wäßrige Verdünnung der aktiven Verbindungen mit einer vorbestimmten Konzentration, die wie oben angegeben hergestellt wurde, in einer Menge von 20 ml pro Topf mittels einer Spritzpistole auf die Pflanzen gesprüht. Nach dem Trocknen der aufgesprühten Substanz an der Luft wurde ein Zylinder aus Kunststoff-Netz von 9 cm Durchmesser und 25 cm Höhe über jeden Topf gestülpt, und 10 Larven von Reisblattwicklern (Cnaphalocrosis medinalis Gueneer) im vierten Entwicklungsstadium wurden in jedem Topf ausgesetzt. Die Töpfe wurden jeweils in einen Raum mit konstanter Temperatur gestellt, und 2 Tage später wurde die Zahl der toten Insekten gezählt. Das Vernichtungsverhältnis wurde dann berechnet. Der obige Test wurde mit zwei Parallelversuchen durchgeführt.

Die Ergebnisse sind in Tabelle 1 dargestellt.

Verbindung Nr. 2: 1-(2-Methoxy-5-pyridylmethyl)-2-(nitromethylen)tetrahydrodropyrimidin,

Verbindung Nr. 3: 1-(2-Bromo-5-pyridylmethyl)-2-(nitromethylen)tetrahydropyrimidin,

Verbindung Nr. 4: 1-(2-Chloro-5-pyridylmethyl)-2-(nitromethylen)imidazolidin,

Verbindung Nr. 5: 1-(2-Fluoro-5-pyridylmethyl)-2-(nitromethylen)imidazolidin.

Verbindungen aus der oben genannten Gruppe (2) der Insektizide, die in der der vorliegenden Erfindung eingesetzt werden:

[A]: Cartap,

[B]: Thiocyclam.

Tabelle 1

Cnaphalocrosis-Test

| Test-Chemikalie | Wirkstoff-Konzentration (ppm) | Vernichtungsverhältnis (%) |
|---|---|---|
| Nr. 1 + /¯A_7 | 40 + 8 | 100 |
| Nr. 1 + /¯B_7 | 40 + 8 | 100 |
| Nr. 2 + /¯A_7 | 40 + 8 | 100 |
| Nr. 2 + /¯B_7 | 40 + 8 | 100 |
| Nr. 3 + /¯A_7 | 40 + 8 | 100 |
| Nr. 3 + /¯B_7 | 40 + 8 | 100 |
| Nr. 4 + /¯A_7 | 40 + 8 | 100 |
| Nr. 4 + /¯B_7 | 40 + 8 | 100 |
| Nr. 5 + /¯A_7 | 40 + 8 | 100 |
| Nr. 5 + /¯B_7 | 40 + 8 | 100 |
| Nr. 1 | 40 | 10 |
| Nr. 2 | 40 | 15 |
| Nr. 3 | 40 | 15 |
| Nr. 4 | 40 | 20 |
| Nr. 5 | 40 | 30 |
| /¯A_7 | 8 | 30 |
| /¯B_7 | 8 | 45 |
| unbehandelt | - | 0 |

Anm. 1. Keine der in den Tests dieses Beispiels eingesetzten Chemikalien-Gemische oder einzelnen Chemikalien zeigte Phytotoxizität.

2. In der vorliegenden Erfindung verwendete Verbindung der allgemeinen Formel (I): Verbindung Nr. 1: 1-(2-Methyl-5-pyridylmethyl)-2-(nitromethylen)tetrahydropyrimidin.

Beispiel 2

Test gegen Sogatella

Drei Reis-Setzlinge von etwa 15 cm Höhe wurden jeweils in Töpfe von etwa 13 cm Durchmesser gepflanzt, und zehn Tage nach dem Umpflanzen wurde eine wäßrige Verdünnung der aktiven Verbindungen mit einer vorbestimmten Konzentration, die wie in Beispiel 1 hergestellt wurde, in einer Menge von 20 ml pro Topf mittels einer Spritzpistole auf die Pflanzen gesprüht. Zehn Tage und zwanzig Tage nach dem Sprühen wurde ein Käfig über jeden Topft gestülpt, und zehn Larven von

Weißrücken-Laternenträgern (Sogatella furcifera) im dritten Entwicklungsstadium wurden in jedem Topf ausgesetzt. Die Töpfe wurden jeweils in einen Raum mit konstanter Temperatur gestellt, und 2 Tage und 7 Tage später wurde die Zahl der toten Insekten gezählt. Der Abtötungsgrad wurde dann berechnet. Der obige Test wurde mit zwei Parallelversuchen durchgeführt.

Die Ergebnisse sind in Tabelle 2 dargestellt.

Tabelle 2

Sogatella-Test

| Test-Chemikalie | Wirkstoff-Konzentration (ppm) | Abtötungsgrad (%) Befall nach 10 Tagen bestimmt 2 d später | Befall nach 10 Tagen bestimmt 7 d später | Befall nach 20 Tagen bestimmt 2 d später | Befall nach 20 Tagen bestimmt 7 d später |
|---|---|---|---|---|---|
| Nr. 1 + [A] | 8 + 8 | 100 | - | 90 | 100 |
| | 4 + 4 | 65 | 100 | 20 | 80 |
| Nr. 2 + [A] | 8 + 8 | 100 | - | 90 | 100 |
| | 4 + 4 | 45 | 100 | 30 | 80 |
| Nr. 3 + [A] | 8 + 8 | 100 | - | 100 | - |
| | 4 + 4 | 80 | 100 | 40 | 100 |
| Nr. 4 + [A] | 8 + 8 | 100 | - | 100 | - |
| | 4 + 4 | 90 | 100 | 40 | 100 |
| Nr. 5 + [A] | 8 + 8 | 100 | - | 100 | - |
| | 4 + 4 | 100 | - | 75 | 100 |
| Nr. 1 | 8 | 30 | 40 | 10 | 10 |
| Nr. 2 | 8 | 40 | 45 | 15 | 20 |
| Nr. 3 | 8 | 80 | 80 | 30 | 30 |
| Nr. 4 | 8 | 75 | 80 | 35 | 40 |
| Nr. 5 | 8 | 90 | 90 | 35 | 35 |
| [A] | 8 | 0 | 85 | 0 | 70 |
| unbehandelt | - | 0 | 0 | 0 | 0 |

Anmerkungen zu Tabelle 2:

1. Keine der in Beispiel 2 eingesetzten Chemikalien-Gemische oder einzelnen Chemikalien zeigte Phytotoxizität.

2. Die in der vorliegenden Erfindung verwendeten Verbindungen Nr. 1, 2, 3, 4 und 5 der allgemeinen Formel (I) sind die gleichen wie diejenigen, die in Beispiel 1 angegeben sind.

3. Verbindung aus der oben genannten Gruppe (2) der Insektizide, die in der vorliegenden Erfindung eingesetzt wird:

[A]: Buprofezin.

Beispiel 3

Test gegen Plutella

Test-Verfahren

Eine wäßrige Verdünnung der aktiven Verbindungen mit einer vorbestimmten Konzentration, die wie in Beispiel 1 hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Die aufgesprühte Substanz wurde an der Luft trocknen gelassen und zehn Larven von Kohlmotten (Plutella maculipennis) im zweiten Entwicklungsstadium wurden in jedem Topf ausgesetzt. Die Töpfe wurden jeweils in einen Raum mit konstanter Temperatur gestellt, und die Zahl der toten Insekten wurde 2 Tage und 7 Tage später gezählt. Der Abtötungsgrad nis wurde berechnet. Der obige Test wurde mit zwei Parallelversuchen durchgeführt.

Die Ergebnisse sind in Tabelle 3 dargestellt.

Tabelle 3

Plutella-Test

| Test-Chemikalie | Wirkstoff-Konzentration (ppm) | Abtötungsgrad (%) 2 Tage später | Abtötungsgrad (%) 7 Tage später |
|---|---|---|---|
| Nr. 1 + [A] | 40 + 20 | 100 | |
| | 20 + 10 | 20 | 85 |
| Nr. 1 + [B] | 40 + 4 | 100 | |
| | 20 + 2 | 40 | 75 |
| Nr. 2 + [A] | 40 + 20 | 100 | - |
| | 20 + 10 | 20 | 80 |
| Nr. 2 + [B] | 40 + 4 | 100 | |
| | 20 + 2 | 30 | 75 |
| Nr. 3 + [A] | 40 + 20 | 100 | |
| | 20 + 10 | 40 | 100 |
| Nr. 3 + [B] | 40 + 4 | 100 | |
| | 20 + 2 | 45 | 80 |
| Nr. 4 + [A] | 40 + 20 | 100 | |
| | 20 + 10 | 35 | 95 |
| Nr. 4 + [B] | 40 + 4 | 100 | |
| | 20 + 2 | 50 | 90 |
| Nr. 5 + [A] | 40 + 20 | 100 | |
| | 20 + 10 | 50 | 100 |
| Nr. 5 + [B] | 40 + 4 | 100 | |
| | 20 + 2 | 70 | 100 |

Tabelle 3 - Fortsetzung

| Test-Chemikalie | Wirkstoff-Konzentration (ppm) | Abtötungsgrad (%) 2 Tage später | 7 Tage später |
|---|---|---|---|
| Nr. 1 | 40 | 35 | 35 |
| Nr. 2 | 40 | 30 | 30 |
| Nr. 3 | 40 | 40 | 40 |
| Nr. 4 | 40 | 40 | 45 |
| Nr. 5 | 40 | 55 | 60 |
| [A] | 20 | 0 | 35 |
| [B] | 4 | 0 | 40 |
| unbehandelt | - | 0 | 0 |

Anmerkungen:

1. Keine der in Beispiel 3 eingesetzten Chemikalien-Gemische oder einzelnen Chemikalien zeigte Phytotoxizität.

2. Die in der vorliegenden Erfindung verwendeten Verbindungen Nr. 1, 2, 3, 4 und 5 der allgemeinen Formel (I) sind die gleichen Verbindungen wie in Beispiel 1.

3. Verbindungen aus der oben genannten Gruppe (2) der Insektizide, die in der vorliegenden Erfindung eingesetzt werden:

[A]: Diflubenzuron,

[B]: N-(2,6-Difluorobenzoyl)-N'-[3,5-dichloro-4-(3-chloro-5-trifluoromethyl-2-pyridyloxyl)-phenyl]harnstoff.

Beispiel 4

Test gegen Plutella

Test-Verfahren

Eine wäßrige Verdünnung der aktiven Verbindungen mit einer vorbestimmten Konzentration, die wie in Beispiel 1 hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Nach dem Trocknen der aufgesprühten Substanz an der Luft wurden zehn Larven von Kohlmotten - (Plutella maculipennis), die gegen Organophosphor-Verbindungen resistent waren, im vierten Enticklungsstadium in jedem Topf ausgesetzt. Die Töpfe wurden jeweils in einen Raum mit konstanter Temperatur gestellt. 2 Tage Tage später wurde die Zahl der toten Insekten gezählt, und der Abtötungsgrad wurde berechnet. Der obige Test wurde mit zwei Parallelversuchen durchgeführt.

Die Ergebnisse sind in Tabelle 4 dargestellt.

## Tabelle 4

Plutella-Test

| Test-Chemikalie | Wirkstoff-Konzentration (ppm) | | Abtötungsgrad (%) |
|---|---|---|---|
| Nr. 1 + [A] | 40 | + 40 | 100 |
| Nr. 2 + [A] | 40 | + 40 | 100 |
| Nr. 3 + [A] | 40 | + 40 | 100 |
| Nr. 4 + [A] | 40 | + 40 | 100 |
| Nr. 5 + [A] | 40 | + 40 | 100 |
| Nr. 1 | 40 | | 25 |
| Nr. 2 | 40 | | 20 |
| Nr. 3 | 40 | | 35 |
| Nr. 4 | 40 | | 35 |
| Nr. 5 | 40 | | 40 |
| [A] | | 40 | 30 |
| unbehandelt | - | | 0 |

Anmerkungen:

1. Keine der in Beispiel 4 eingesetzten Chemikalien-Gemische oder einzelnen Chemikalien zeigte Phytotoxizität.

2. Die in der vorliegenden Erfindung verwendeten Verbindungen Nr. 1, 2, 3, 4 und 5 der allgemeinen Formel (I) sind die gleichen wie diejenigen, die in Beispiel 1 verwendet wurden.

3. Verbindung aus der oben genannten Gruppe (2) oder Insektizide, die in der vorliegenden Erfindung eingesetzt wird:

[A]: 3-Phenoxybenzyl-2-(4-ethoxyphenyl)-2-methylpropylether.

Beispiel 5

Benetzbares Pulver

20 Teile der aktiven Substanz der Formel (I), 20 Teile Cartap, 55 Teile eines 1 : 5 -Gemischs aus pulvriger Diatomeenerde und pulvrigem Ton, 2 Teile Alkylbenzolsulfonat und 3 Teile Natriumalkylnaphthalinsulfonat-Formaldehyd-Kondensat werden pulversisiert und miteinander vermischt, wodurch ein benetzbares Pulver erhalten wird.

B) Biologische Beispiele für neue aktive Substanz-Kombinationen aus (1) einem Nitromethylen-Derivat der Formel (I) und einer Carbonsäureester-Verbindung der Gruppe (3) (Formel (II)):

Beispiel 6

Test gegen Plutella

Herstellung einer Test-Chemikalie:

Lösungsmittel: 3 Gew.-Teile Xylol

Emulgator: 1 Gew.-Teil Polyoxyethylenalkylphenylether

Zur Herstellung einer Formulierung der aktiven Verbindungen wurde 1 Gew.-Teil der aktiven Verbindungen mit der oben bezeichneten Menge Lösungsmittel, das die oben angegebenen Menge Emulgator enthielt, vermischt, und die Mischung wurde mit Wasser auf eine vorher festgesetzte Konzentration verdünnt.

Test-Verfahren

Eine wäßrige Verdünnung der aktiven Verbindungen mit einer vorbestimmten Konzentration, die die im Vorstehenden angegeben hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Die aufgesprühte Substanz wurde an der Luft trocknen gelassen, und zehn Larven von Kohlmotten (Plutella maculipennis), die gegen Organophosphor-Verbindungen resistent waren, im vierten Entwicklungsstadium wurden in jedem Topf ausgesetzt. Die Töpfe wurden jeweils in einen Raum mit konstanter Temperatur gestellt, und die Zahl der toten Insekten wurde 2 Tage später gezählt. Der Abtötungsgrad wurde berechnet. Der obige Test wurde mit zwei Parallelversuchen durchgeführt.

Die Ergebnisse sind in Tabelle 5 dargestellt.

Tabelle 5

Plutella-Test

| Test-Chemikalie | Wirkstoff-Konzentration (ppm) | Abtötungsgrad (%) |
|---|---|---|
| Nr. 1 + /‾B_7 | 40 + 8 | 100 |
| Nr. 1 + /‾E_7 | 40 + 8 | 90 |
| Nr. 1 + /‾G_7 | 40 + 80 | 90 |
| Nr. 2 + /‾A_7 | 40 + 8 | 100 |
| Nr. 2 + /‾C_7 | 40 + 8 | 95 |
| Nr. 2 + /‾F_7 | 40 + 8 | 90 |

Tabelle 5 - Fortsetzung

| Test-Chemikalie | Wirkstoff-Konzentration (ppm) | Abtötjngsgrad (%) |
|---|---|---|
| Nr. 3 + [B] | 40 + 8 | 100 |
| Nr. 3 + [C] | 40 + 8 | 100 |
| Nr. 3 + [G] | 40 + 80 | 100 |
| Nr. 4 + [A] | 40 + 8 | 100 |
| Nr. 4 + [D] | 40 + 8 | 90 |
| Nr. 4 + [F] | 40 + 8 | 100 |
| Nr. 5 + [D] | 40 + 8 | 100 |
| Nr. 5 + [E] | 40 + 8 | 100 |
| Nr. 5 + [F] | 40 + 8 | 100 |
| Nr. 1 | 40 | 25 |
| Nr. 2 | 40 | 20 |
| Nr. 3 | 40 | 35 |
| Nr. 4 | 40 | 35 |
| Nr. 5 | 40 | 40 |
| [A] | 8 | 30 |
| [B] | 8 | 30 |
| [C] | 8 | 20 |
| [D] | 8 | 5 |
| [E] | 8 | 20 |
| [F] | 8 | 15 |
| [G] | 80 | 25 |
| unbehandelt | - | 0 |

Anmerkungen:

1. Keine der in dem Test des Beispiels 6 eingesetzten Chemikalien-Gemische oder einzelnen Chemikalien zeigte Phytotoxizität.

2. In der vorliegenden Erfindung verwendete Verbindungen der allgemeinen Formel (I):

Verbindung Nr. 1: 1-(2-Methyl-5-pyridylmethyl)-2-(nitromethylen)tetrahydropyrimidin,

Verbindung Nr. 2: 1-(2-Methoxy-5-pyridylmethyl)-2-(nitromethylen)tetrahydropyrimidin,

Verbindung Nr. 3: 1-(2-Bromo-5-pyridylmethyl)-2-(nitromethylen)tetrahydropyrimidin,

Verbindung Nr. 4: 1-(2-Chloro-5-pyridylmethyl)-2-(nitromethylen)imidazolidin,

Verbindung Nr. 5: 1-(2-Fluoro-5-pyridylmethyl)-2-(nitromethylen)imidazolidin.

3. Verbindungen (Carbonsäureester der Formel (II)) aus der oben genannten Gruppe (3) der Insektizide, die in der vorliegenden Erfindung eingesetzt werden:

[A]: Cyfluthrin,
[B]: Cyhalothrin,
[C]: Fenpropathrin,
[D]: Fenvalerate,
[E]: Flucythrinate,
[F]: Fluvalinate,
[G]: α-Cyano-5-phenoxybenzyl-1-p-ethoxyphenyl-2,2-dichlorocyclopropan-1-carboxylat.

Beispiel 7

Emulgierbares Konzentrat

2 Teile der aktiven Substanz der Formel (I), 2 Teile Cyfluthrin, 81 Teile Xylol, 8 Teile Polyoxyethylenalkyl phenylether und 7 Teile Calciumalkylbenzolsulfonat werden unter Rühren miteinander vermischt, wodurch ein emulgierbares Konzentrat erhalten wird.

C) Biologische Beispiele für neue aktive Substanz-Kombinationen aus (1) einem Nitromethylen-Derivat der Formel (I) und einem Carbamat der Gruppe (4) (Formel (III)):

Beispiel 8

Test gegen Nilaparvata

Herstellung einer Test-Chemikalie

Lösungsmittel: 3 Gew.-Teile Xylol

Emulgator: 1 Gew.-Teil Polyoxyethylenalkylphenylether

Zur Herstellung einer Formulierung der aktiven Verbindungen wurde 1 Gew.-Teil der aktiven Verbindungen mit der oben bezeichneten Menge Lösungsmittel, das die oben angegebenen Menge Emulgator enthielt, vermischt, und die Mischung wurde mit Wasser auf eine vorher festgesetzte Konzentration verdünnt.

Test-Verfahren

Drei Reis-Setzlinge von 15 cm Höhe wurden jeweils in Töpfe von 13 cm Durchmesser gepflanzt. Zehn Tage nach dem Umpflanzen wurde eine wäßrige Verdünnung der aktiven Verbindungen mit einer vorbestimmten Konzentration, die wie oben angegeben hergestellt wurde, in einer Menge von 20 ml pro Topf mittels einer Spritzpistole auf die Pflanzen gesprüht. Nach dem Trocknen der aufgesprühten Substanz an der Luft wurde ein Käfig über jeden Topf gestülpt, und 10 Larven braunen Reisblattwanzen (Nilaparvata lugens) im vierten Entwicklungsstadium wurden in jedem Topf ausgesetzt. Die Töpfe wurden jeweils in einen Raum mit konstanter Temperatur gestellt. Drei Tage später wurde die Zahl der toten Insekten gezählt, und der Abtötungsgrad wurde berechnet. Der obige Test wurde mit zwie Parallelversuchen durchgeführt.

Die Ergebnisse sind in Tabelle 6 dargestellt.

Tabelle 6

Nilaparvata-Test

| Test-Chemikalie | Wirkstoff-Konzentration (ppm) | Vernichtungsverhältnis (%) |
|---|---|---|
| Nr. 1 + [A] | 8 + 100 | 95 |
| Nr. 1 + [H] | 8 + 100 | 80 |
| Nr. 2 + [D] | 8 + 100 | 80 |
| Nr. 2 + [I] | 8 + 100 | 85 |
| Nr. 2 + [B] | 8 + 100 | 100 |
| Nr. 3 + [C] | 8 + 100 | 90 |
| Nr. 3 + [D] | 8 + 100 | 90 |
| Nr. 4 + [A] | 8 + 100 | 100 |
| Nr. 4 + [B] | 8 + 100 | 100 |
| Nr. 4 + [F] | 8 + 100 | 100 |
| Nr. 5 + [B] | 8 + 100 | 100 |
| Nr. 5 + [E] | 8 + 100 | 90 |
| Nr. 5 + [G] | 8 + 100 | 80 |
| Nr. 1 | 8 | 10 |
| Nr. 2 | 8 | 5 |
| Nr. 3 | 8 | 15 |
| Nr. 4 | 8 | 30 |
| Nr. 5 | 8 | 35 |

Tabelle 6 - Fortsetzung

| Test-Chemikalie | Wirkstoff-Konzentration (ppm) | Abtötungsgrad (%) |
|---|---|---|
| [A] | 100 | 50 |
| [B] | 100 | 45 |
| [C] | 100 | 10 |
| [D] | 100 | 15 |
| [E] | 100 | 20 |
| [F] | 100 | 50 |
| [G] | 100 | 5 |
| [H] | 100 | 15 |
| [I] | 100 | 35 |
| unbehandelt | - | 0 |

Anmerkungen:

1. Keine der in dem Test des Beispiels 6 eingesetzten Chemikalien-Gemische oder einzelnen Chemikalien zeigte Phytotoxizität.

2. In der vorliegenden Erfindung verwendete Verbindungen der allgemeinen Formel (I):

Verbindung Nr. 1: 1-(2-Methyl-5-pyridylmethyl)-2-(nitromethylen)tetrahydropyrimidin,

Verbindung Nr. 2: 1-(2-Methoxy-5-pyridylmethyl)-2-(nitromethylen)tetrahydropyrimidin,

Verbindung Nr. 3: 1-(2-Bromo-5-pyridylmethyl)-2-(nitromethylen)tetrahydropyrimidin,

Verbindung Nr. 4: 1-(2-Chloro-5-pyridylmethyl)-2-(nitromethylen)imidazolidin,

Verbindung Nr. 5: 1-(2-Fluoro-5-pyridylmethyl)-2-(nitromethylen)imidazolidin.

3. Verbindungen (Carbamate der Formel (III)) aus der oben genannten Gruppe (4) der Insektizide, die in der vorligenden Erfindung eingesetzt werden:

[A]: Propoxur,
[B]: BPMC,
[C]: Isoprocarb,
[D]: Metolcarb,
[E]: Xylylcarb,
[F]: Carbofuran,
[G]: Carbosulfan,
[H]: Aminosulfan,
[I]: Bendiocarb.

Beispiel 9

Test gegen Aphis

Test-Verfahren:

Baumwollblattläuse (Gurkenblattläuse; Aphis gossypii), die gezüchtet worden waren, wurden auf Auberginen-Setzlingen von etwa 15 cm Höhe ausgesetzt, die in Töpfen von 9 cm Durchmesser gezogen worden waren, und zwar etwa 100 Blattläuse pro Setzling. Einen Tag nach dem Aussetzen wurde eine wäßrige Verdünnung der aktiven Verbindungen, die wie in Beispiel 8 hergestellt wurde, mit einer vorbestimmten Konzentration in einer Menge von 20 ml pro Topf mittels einer Spritzpistole auf die Pflanzen gesprüht. Nach dem Sprühen wurden die Töpfe in einem Gewächshaus bei 28°C gehalten. Zwei Tage nach dem Sprühen wurde die Zahl der toten Insekten gezählt, und der Abtötungsgrad wurde berechnet.

Die Ergebnisse sind in Tabelle 7 dargestellt.

Tabelle 7

Aphis-Test

| Test-Chemikalie | Wirkstoff-Konzentration (ppm) | Abtötungsgrad (%) |
|---|---|---|
| Nr. 1 + [A] | 40 + 40 | 100 |
| Nr. 1 + [B] | 40 + 40 | 100 |
| Nr. 2 + [A] | 40 + 40 | 100 |
| Nr. 2 + [B] | 40 + 40 | 100 |
| Nr. 3 + [A] | 40 + 40 | 100 |
| Nr. 3 + [B] | 40 + 40 | 100 |
| Nr. 4 + [A] | 40 + 40 | 100 |
| Nr. 4 + [B] | 40 + 40 | 100 |
| Nr. 5 + [A] | 40 + 40 | 100 |
| Nr. 5 + [B] | 40 + 40 | 100 |
| Nr. 1 | 40 | 17 |
| Nr. 2 | 40 | 22 |
| Nr. 3 | 40 | 26 |
| Nr. 4 | 40 | 41 |
| Nr. 5 | 40 | 37 |
| [A] | 40 | 36 |
| [B] | 40 | 40 |
| unbehandelt | - | 0 |

Anmerkungen:

1. Keine der in den Tests dieses Beispiels eingesetzten Chemikalien-Gemische oder einzelnen Chemikalien zeigte Phytotoxizität.

2. Die in der vorliegenden Erfindung verwendeten Verbindungen Nr. 1, 2, 3, 4 und 5 der allgemeinen Formel (I) sind die gleichen wie diejenigen, die in Beispiel 8 eingesetzt wurden.

3. Verbindungen (Carbamate der Formel (III)) aus der oben genannten Gruppe (4) der Insektizide, die in der vorliegenden Erfindung eingesetzt werden:

[A]: Ethiofencarb,
[B]: Pirimicarb.

Beispiel 10

Benetzbares Pulver

20 Teile der aktiven Substanz der Formel (I), 20 Teile Propoxur, 55 Teile eines 1 : 5 -Gemischs aus pulvriger Diatomeenerde und pulvrigem Ton, 2 Teile Natrium-alkylbenzosulfonat und 3 Teile Natrium-alkylnaphthalinsulfonat-Formaldehyd-Kondensat werden pulverisiert und miteinander vermischt, wodurch ein benetzbares Pulver erhalten wird.

Beispiel 11

Stäubemittel

Ein Teil der aktiven Substanz der Formel (I), ein Teil BPMC und 98 Teile pulvriger Ton werden pulverisiert und miteinander vermischt, wodurch ein Stäubemittel erhalten wird.

Beispiel 12

Granulat

Ein Drehmischer wird mit 96 Teilen Tonmineral-Teilchen mit einer Teilchengrößen-Verteilung zwischen 0,2 und 2 mm beschickt, und unter Drehen werden 2 Teile der aktiven Substanz der Formel (I) und 2 Teile Carbofuran auf die Teilchen aufgesprüht, um sie gleichmäßig zu benetzen. Die Teilchen wurden getrocknet, wodurch ein Granulat gebildet wird.

D) Biologische Beispiele für neue aktive Substanz-Kombinationen aus (1) einem Nitromethylen-Derivat der Formel (I) und einem Organophosphat-ester der Formel (IV) der Gruppe (5):

Beispiel 13

Test gegen C naphalocrocis

Herstellung einer Test-Chemikalie:

Lösungsmittel: 3 Gew.-Teile Xylol

Emulgator: 1 Gew.-Teil Polyoxyethylenalkylphenylether

Zur Herstellung einer Formulierung der aktiven Verbindungen wurde 1 Gew.-Teil der aktiven Verbindungen mit der oben bezeichneten Menge Lösungsmittel, das die oben angegebenen Menge Emulgator enthielt, vermischt, und die Mischung wurde mit Wasser auf eine vorher festgesetzte Konzentration verdünnt.

Test-Verfahren

Drei Reis-Setzlinge von 15 cm Höhe wurden jeweils in Vinylharz-Töpfe von 9 cm Durchmesser gepflanzt. Zehn Tage nach dem Umpflanzen wurde eine wäßrige Verdünnung der aktiven Verbindungen mit einer vorbestimmten Konzentration, die wie oben angegeben hergestellt wurde, in einer Menge von 20 ml pro Topf mittels einer Spritzpistole auf die Pflanzen gesprüht. Nach dem Trocknen der aufgesprühten Substanz an der Luft wurde ein Zylinder aus Kunststoff-Netz von 9 cm Durchmesser und 25 cm Höhe über jeden Topf gestülpt, und10 Larven von Reisblattwicklern (Onaphalocrocis medinalis) im vierten Entwicklungsstadium wurden in jedem Topf ausgesetzt. Die Töpfe wurden jeweils in einen Raum mit konstanter Temperatur gestellt. Zwei Tage später wurde die Zahl der toten Insekten gezählt, und der Abtötungsgrad wurden dann berechnet. Der obige Test wurde mit zwei Parallelversuchen durchgeführt.

Die Ergebnisse sind in Tabelle 8 dargestellt.

Tabelle 8

Onaphalocrocis-Test

| Test-Chemikalie | Wirkstoff-Konzentration (ppm) | Abtötungsgrad (%) |
|---|---|---|
| Nr. 1 + /¯A_7 | 40 + 8 | 100 |
| Nr. 1 + /¯D_7 | 40 + 8 | 90 |
| Nr. 2 + /¯B_7 | 40 + 8 | 90 |
| Nr. 2 + /¯C_7 | 40 + 8 | 100 |
| Nr. 3 + /¯A_7 | 40 + 8 | 100 |
| Nr. 3 + /¯B_7 | 40 + 8 | 100 |
| Nr. 4 + /¯B_7 | 40 + 8 | 100 |
| Nr. 4 + /¯C_7 | 40 + 8 | 100 |
| Nr. 5 + /¯C_7 | 40 + 8 | 100 |
| Nr. 5 + /¯D_7 | 40 + 8 | 100 |

Tabelle 8 - Fortsetzung

Onaphalocrosis-Test -

| Test-Chemikalie | | Wirkstoff-Konzentration (ppm) | | Abtötungsgrad (%) |
|---|---|---|---|---|
| Nr. 1 | | 40 | | 10 |
| Nr. 2 | | 40 | | 15 |
| Nr. 3 | | 40 | | 15 |
| Nr. 4 | | 40 | | 20 |
| Nr. 5 | | 40 | | 30 |
| | /‾A_7 | | 8 | 40 |
| | /‾B_7 | | 8 | 30 |
| | /‾C_7 | | 8 | 50 |
| | /‾D_7 | | 8 | 30 |
| unbehandelt | | - | | 0 |

Anmerkung:

1. Keine der in den Tests dieses Beispiels eingesetzten Chemikalien-Gemische oder einzelnen Chemikalien zeigte Phytotoxizität.

2. In der vorliegenden Erfindung verwendete Verbindungen der allgemeinen Formel (I):

Verbindung Nr. 1: 1-(2-Methyl-5-pyridylmethyl)-2-(nitromethylen)tetrahydropyrimidin,

Verbindung Nr. 2: 1-(2-Methoxy-5-pyridylmethyl)-2-(nitromethylen)tetrahydropyrimidin,

Verbindung Nr. 3: 1-(2-Bromo-5-pyridylmethyl)-2-(nitromethylen)tetrahydropyrimidin,

Verbindung Nr. 4: 1-(2-Chloro-5-pyridylmethyl)-2-(nitromethylen)imidazolidin,

Verbindung Nr. 5: 1-(2-Fluoro-5-pyridylmethyl)-2-(nitromethylen)imidazolidin.

3. Verbindungen (Organophosphatester der Formel (IV)) aus der oben genannten Gruppe (5) der Insektizide, die in der vorliegenden Erfindung eingesetzt werden:

[A]: Isoxathin,

[B]: Pyridaphenthion,

[C]: Tetrachlorvinphos,

[D]: Sulprofos.

Beispiel 14

Test gegen Plutella

Test-Verfahren

Eine wäßrige Verdünnung der aktiven Verbindungen mit einer vorbestimmten Konzentration, die wie in Beispiel 13hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Nach dem Trocknen der aufgesprühten Substanz an der Luft wurden zehn Larven von gegen Organophosphat resistenten Kohlmotten - (Plutella maculipennis) im vierten Entwicklungsstadium in jedem Topf ausgesetzt. Die Töpfe wurden jeweils in einen Raum mit konstanter Temperatur gestellt. 2 Tage später wurde die Zahl der toten Insekten gezählt, und der Abtötungsgrad wurde berechnet. Der obige Test wurd mit zwei Parallelversuchen durchgeführt.

Die Ergebnisse sind in Tabelle 9 dargestellt.

Tabelle 9

Plutella-Test

| Test-Chemikalie | Wirkstoff-Konzentration (ppm) | Abtötungsgrad (%) |
|---|---|---|
| Nr. 1 + [A] | 40 + 40 | 100 |
| Nr. 1 + [B] | 40 + 40 | 100 |
| Nr. 1 + [D] | 40 + 40 | 100 |
| Nr. 2 + [A] | 40 + 40 | 100 |
| Nr. 2 + [B] | 40 + 40 | 100 |
| Nr. 2 + [C] | 40 + 40 | 100 |
| Nr. 3 + [A] | 40 + 40 | 100 |
| Nr. 3 + [B] | 40 + 40 | 100 |
| Nr. 3 + [C] | 40 + 40 | 100 |
| Nr. 4 + [B] | 40 + 40 | 100 |
| Nr. 4 + [C] | 40 + 40 | 100 |
| Nr. 4 + [D] | 40 + 40 | 100 |
| Nr. 5 + [A] | 40 + 40 | 100 |
| Nr. 5 + [C] | 40 + 40 | 100 |
| Nr. 5 + [D] | 40 + 40 | 100 |
| Nr. 1 | 40 | 25 |
| Nr. 2 | 40 | 20 |
| Nr. 3 | 40 | 35 |
| Nr. 4 | 40 | 35 |
| Nr. 5 | 40 | 40 |
| [A] | 40 | 25 |
| [B] | 40 | 40 |
| [A] | 40 | 30 |
| [B] | 40 | 30 |
| unbehandelt | - | 0 |

Anmerkungen zu Tabelle 9:

1. Keine der in den Tests des Beispiels 14 eingesetzten Chemikalien-Gemische oder einzelnen Chemikalien zeigte Phytotoxizität.

2. Die in der vorliegenden Erfindung verwendeten Verbindungen Nr. 1, 2, 3, 4 und 5 der allgemeinen Formel (I) sind die gleichen wie diejenigen, die in Beispiel 13 eingesetzt werden.

3. Verbindungen (Organophosphat-ester der Formel (IV)) aus der oben genannten Gruppe (5) der Insektizide, die in der vorliegenden Erfindung eingesetzt werden:

[A]: Prothiofos,
[B]: Pirimiphos-methyl,
[C]: Chlorpyrifos,
[D]: Acephate.

Beispiel 15

Test gegen Myzus

Test-Verfahren

Grüne Pfirsichblattläuse (Myzus persicae), die gegen Organophosphate und Carbamate resistent waren, wurden auf Auberginen-Setzlingen von etwa 20 cm Höhe ausgesetzt, die in Töpfen von 9 cm Durchmesser gezogen worden waren, und zwar etwa 100 Blattläuse pro Setzling. Einen Tag nach dem Aussetzen wurde eine wäßrige Verdünnung der aktiven Verbindungen mit einer vorbestimmten Konzentration, die wie in Beispiel 13 hergestellt wurde, in einer Menge von 20 ml pro Topf mittels einer Spritzpistole auf die Pflanzen gesprüht. Nach dem Sprühen wurden die Töpfe in einem Gewächshaus bei 28°C stehen gelassen. Drei Tage nach dem Sprühen wurde die Zahl der toten Insekten gezählt, und der Abtötungsgrad wurde berechnet.

Die Ergebnisse sind in Tabelle 10 dargestellt.

## Tabelle 10

Myzus-Test

| Test-Chemikalie | Wirkstoff-Konzentration (ppm) | Abtötungsgrad (%) |
|---|---|---|
| Nr. 1 + [A] | 40 + 40 | 100 |
| Nr. 1 + [B] | 40 + 40 | 100 |
| Nr. 2 + [A] | 40 + 40 | 100 |
| Nr. 2 + [B] | 40 + 40 | 100 |
| Nr. 3 + [A] | 40 + 40 | 100 |
| Nr. 3 + [B] | 40 + 40 | 100 |
| Nr. 4 + [A] | 40 + 40 | 100 |
| Nr. 4 + [B] | 40 + 40 | 100 |
| Nr. 5 + [A] | 40 + 40 | 100 |
| Nr. 5 + [B] | 40 + 40 | 100 |
| Nr. 1 | 40 | 31 |
| Nr. 2 | 40 | 25 |
| Nr. 3 | 40 | 38 |
| Nr. 4 | 40 | 30 |
| Nr. 5 | 40 | 44 |
| [A] | 40 | 15 |
| [B] | 40 | 8 |
| unbehandelt | - | 0 |

Anmerkungen zu Tabelle 10:

1. Keine der in den Tests des Beispiels 15 eingesetzten Chemikalien-Gemische oder einzelnen Chemikalien zeigte Phytoxizität.

2. Die in der vorliegenden Erfindung verwendeten Verbindungen Nr. 1, 2, 3, 4 und 5 der allgemeinen Formel (I) sind die gleichen wie diejenigen, die in Beispiel 13 eingesetzt wurden.

3. Verbindungen (Carbamate der Formel -(IV)) aus der oben genannten Gruppe (5) der Insektizide, die in der vorliegenden Erfindung eingesetzt werden:

[A]: Disulfoton,

[B]: Vamidothion.

### Beispiel 16

Benetzbares Pulver

20 Teile der aktiven Substanz der Formel (I), 20 Teile Prothiofos, 55 Teile eines 1 : 5 -Gemischs aus pulvriger Diatomeenerde und pulvrigem Ton, 2 Teile Alkylbenzolsulfonat und 3 Teile Natrium-alkylnaphthalinsulfonat-Formaldehyd-Kondensat werden pulverisiert und miteinander vermischt, wodurch ein benetzbares Pulver erhalten wird.

Beispiel 17

Stäubemittel

Ein Teil der aktiven Substanz der Formel (I), zwei Teile Pyridaphenthion und 97 Teile pulvriger Ton werden pulverisiert und miteinander vermischt, wodurch ein Stäubemittel erhalten wird.

Beispiel 18

Granulat

Ein Drehmischer wird mit 95 Teilen Tonmineral-Teilchen mit einer Teilchengrößen-Verteilung zwischen 0,2 und 2 mm beschickt, und unter Drehen werden 2 Teile der aktiven Substanz der Formel (I) und 3 Teile Disulfoton auf die Teilchen aufgesprüht, um sie gleichmäßig zu benetzen. Die Teilchen wurden getrocknet, wodurch ein Granulat gebildet wird.

**Ansprüche**

1. Insektizide Zusammensetzung, enthaltend

(1) ein Nitromethylen-Derivat der Formel (I)

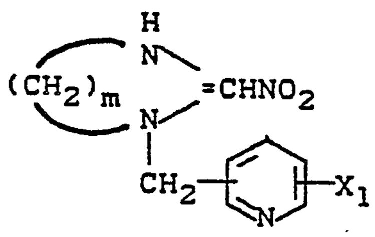

(I)

,

in der

X eine Niederalkyl-Gruppe, eine Niederalkoxy-Gruppe oder ein Halogen-Atom bezeichnet,

l 0, 1 oder 2 bezeichnet und

m 2 oder 3 bezeichnet,

und

wenigstens eine aus den folgenden Gruppen (2) bis (5) ausgewählte insektizide Verbindung:

(2) Gruppe der Insektizide bestehend aus S,S'-2-Dimethylaminotrimethylen-bis(thiocarbamat), N,N-Dimethyl-1,2,3-trithian-5-ylamin, 2-t-Butylimino-3-isopropyl-5-phenyl-1,3,5-thiadiazinan-4-on, 1-(4-Chlorophenyl)-3-(2,6-difluorobenzoyl)harnstoff, N-(2,6-Difluorobenzoyl-N'-[3,5-di chloro-4-(3-chloro-5-trifluoromethyl-2-pyridyloxy)phenyl]harnstoff, 3-Phenoxybenzyl-2-(4-ethoxyphenyl)-2-methylpropylether, 1-(4-Trifluoromethoxyphenyl)-3-(2-chlorobenzoyl)harnstoff, 1-[4-(2-Dichloro-1-difluoroethoxy)phenyl]-3-(2-chlorobenzoyl)harnstoff, 1-(4-Trifluorophenyl)-3-(2,6-difluorobenzoyl)-harnstoff, 1-(2,4-Difluoro-3,5-dichlorophenyl)-3-(2,6-difluorobenzoyl)harnstoff und N-[6-(2,2,3-Trifluoro-3-chloro-benzodioxin-(1,4))]-N'-(2,6-difluorobenzoyl)harnstoff;

(3) Gruppe der Carbonsäureester der folgenden Formel

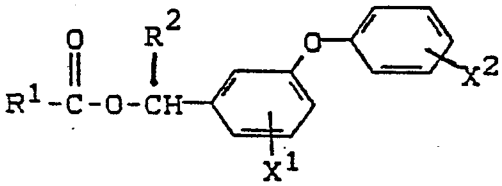

(II)

,

in der

$R^1$ eine substituierte Niederalkyl-Gruppe oder eine substituierte Cyclopropyl-Gruppe bezeichnet,

$R^2$ ein Wasserstoff-Atom oder CN bezeichnet und

$X^1$ und $X^2$ jeweils ein Wasserstoff-oder Halogen-Atom bezeichnen;

(4) Gruppe der Carbamate der folgenden Formel

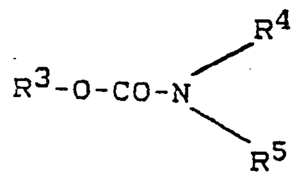

(III)

,

in der

$R^3$ eine substituierte oder unsubstituierte Aryl-Gruppe, heterocyclische Gruppe oder Oxim-Gruppe bezeichnet,

$R^4$ ein Wasserstoff-Atom oder ein Niederalkyl-Gruppe bezeichnet und

$R^5$ eine Niederalkyl-Gruppe oder die Gruppe

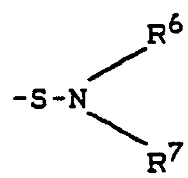

bezeichnet, in der

$R^6$ für eine Niederalkyl-Gruppe steht und

$R^7$ für eine Niederalkyl-Gruppe, eine Niederalkoxycarbonyl-Gruppe oder eine Niederalkoxycarbonylalkyl-Gruppe steht;

(5) Gruppe der Organophosphatester der folgenden Formel

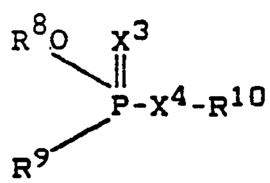

(IV)

,

in der

$X^3$ ein Sauerstoff-oder Schwefel-Atom bezeichnet,

$X^4$ ein Sauerstoff-oder Schwefel-Atom oder eine direkte Bindung zwischen dem Phosphor-Atom und $R^{10}$ in der Formel bezeichnet,

$R^8$ eine Niederalkyl-Gruppe bezeichnet,

$R^9$ eine Niederalkoxy-Gruppe, eine Niederalkylthio-Gruppe, eine Niederalkylcarbonylamid-Gruppe oder eine Phenyl-Gruppe bezeichnet und

$R^{10}$ eine substituierte oder unsubstituierte Niederalkyl-, Niederalkenyl-, Phenyl-oder Heteroaryl-Gruppe bezeichnet oder

$R^9$ und $R^{10}$ gemeinsam zusammen mit dem Phosphor-Atom und $X^4$ in der Formel einen Phosphorin-Ring bezeichnen.

2. Insektizide Zusammensetzung nach Anspruch 1, dadurch gekennzeichnet, daß ein Nitromethyl-Derivat der Formel (I) mit einem Carbonssäureester der Formel (II) kombiniert wird, in der

$R^1$ eine Alkyl-Gruppe bezeichnet, die durch eine Phenyl-Gruppe substituiert ist, die ihrerseits durch einen aus Halogen-Atomen, Niederalkoxy-Gruppen

und Niederhalogenoalkoxy-Gruppen ausgewählten Substituenten substituiert ist, und die Alkyl-Gruppe weiter durch eine Dichlorocyclopropan-Gruppe substituiert sein kann, oder

$R^1$ eine Alkyl-Gruppe bezeichnet, die durch eine Phenylamino-Gruppe substituiert ist, die ihrerseits durch ein Halogen-Atom und eine Halogenoalkyl-Gruppe substituiert sein kann, wobei die Halogenoalkyl-Gruppe vorzugsweise eine Trifluoromethyl-Gruppe ist, oder

$R^1$ eine Cyclopropyl-Gruppe bezeichnet, die durch eine Alkyl-Gruppe mit 1 bis 3 Kohlenstoff-Atomen, vorzugsweise eine Methyl-Gruppe substituiert ist, oder eine Cyclopropyl-Gruppe bezeichnet, die durch eine Alkyl-Gruppe mit 1 bis 3 Kohlenstoff-Atomen, vorzugsweise eine Methyl-Gruppe, und eine Halogenoalkyl-Gruppe mit 2 bis 3 Kohlenstoff-Atomen substituiert ist,

$R^2$ ein Wasserstoff-Atom oder CN bezeichnet und

$X^1$ und $X^2$ jeweils ein Wasserstoff-Atom, ein Chlor-Atom oder ein Fluor-Atom bezeichnen, wobei vorzugsweise $X^1$ ein Wasserstoff-oder Fluor-Atom bezeichnet und $X^2$ ein Wasserstoff-Atom bezeichnet.

3. Insektizide Zusammensetzung nach Anspruch 1, dadurch gekennzeichnet, daß ein Nitromethylen-Derivat der Formel (I) mit einem Carbamat der Formel (III) kombiniert wird, in der

$R^3$ eine Phenyl-Gruppe bezeichnet, die durch eine oder zwei gleiche oder verschiedene Alkyl-Gruppe, Alkoxy-Gruppen mit 1 bis 4 Kohlenstoff-Atomen oder Ethylthiomethyl-Gruppen substituiert ist, oder

$R^3$ eine Naphthyl-Gruppe, eine Pyrimidinyl-Gruppe, die durch eine Dialkylamino-Gruppe mit 1 bis 3 Kohlenstoff-Atomen, vorzugsweise eine Dimethylamino-Gruppe, und zwei Alkyl-Gruppen mit 1 bis 4 Kohlenstoff-Atomen, vorzugsweise Methyl-Gruppen, substituiert ist, oder eine 2,3-Dihydrobenzofuranyl-oder -benzoxazolyl-Gruppe, die durch eine Alkyl-Gruppe mit 1 bis 4 Kohlenstoff-Atomen, vorzugsweise eine Methyl-Gruppe, substituiert ist, bezeichnet oder

$R^3$ eine Gruppe der allgemeinen Formel

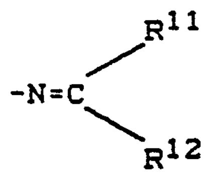

bezeichnet, in der

$R^{11}$ eine Alkyl-Gruppe mit 1 bis 4 Kohlenstoff-Atomen, vorzugsweise eine Methyl-Gruppe, bezeichnet und

$R^{12}$ eine Alkylthio-Gruppe mit 1 bis 4 Kohlenstoff-Atomen, vorzugsweise eine Methylthio-Gruppe, bezeichnet,

$R^4$ ein Wasserstoff-Atom oder eine Alkyl-Gruppe mit 1 bis 4 Kohlenstoff-Atomen bezeichnet, wobei vorzugsweise die Alkyl-Gruppe mit 1 bis 4 Kohlenstoff-Atomen $R^4$ Methyl bezeichnet, und

$R^5$ eine Alkyl-Gruppe mit 1 bis 4 Kohlenstoff-Atomen, vorzugsweise eine Methyl-Gruppe, oder eine Gruppe der Formel

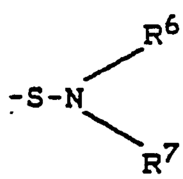

bezeichnet, in der

$R^6$ für eine Alkyl-Gruppe mit 1 bis 5 Kohlenstoff-Atomen steht und

$R^7$ für eine Alkyl-Gruppe, eine Alkoxycarbonyl-Gruppe oder eine Alkoxycarbonylalkyl-Gruppe steht, die jeweils 1 bis 5 Kohlenstoff-Atome umfassen.

4. Insektizidie Zusammensetzung nach Anspruch 1, dadurch gekennzeichnet, daß ein Nitromethylen-Derivat der Formel (I) mit einem Organophosphatester der Formel (IV) kombiniert wird, in der

$R^8$ eine Alkyl-Gruppe mit 1 bis 4 Kohlenstoff-Atomen bezeichnet,

$R^9$ eine Alkoxy-Gruppe, eine Alkylthio-Gruppe oder eine Alkylcarbonylamid-Gruppe, die jeweils 1 bis 4 Kohlenstoff-Atome umfassen, oder eine Phenyl-Gruppe bezeichnet,

$R^{10}$ eine durch einen oder zwei aus Halogen-Atomen und Methyl-, Methylthio-, Nitro-und Cyano-Gruppen ausgewählte Substituenten substituierte Phenyl-Gruppe bezeichnet oder

$R^{10}$ eine Alkyl-Gruppe mit 1 bis 3 Kohlenstoff-Atomen bezeichnet, die gegebenenfalls durch ein Halogen-Atom, eine Alkylthio-(oder -sulfinyl-) -Gruppe mit 2 bis 3 Kohlenstoff-Atomen, eine Phenyl-Gruppe, eine Alkoxycarbonyl-Gruppe mit 1 bis 4 Kohlenstoff-Atomen, eine Alkylcarbamoyl-Gruppe mit 1 bis 4 Kohlenstoff-Atomen, eine Alkylcarbamoylalkyl-($C_{1-2}$)thioalkyl($C_{1-2}$)-Gruppe oder eine Alkoxycarbonyl-N-methylcarbamoyl-Gruppe mit 1 bis 4 Kohlenstoff-Atomen, eine halogen-substituierte Benzoxazol-Gruppe oder eine Alkyl-Gruppe mit 1 bis 2 Kohlenstoff-Atomen, die durch ein Halogen-Atom und eine Phthalimid-Gruppe substituiert ist, oder

$R^{10}$ eine Alkenyl-Gruppe mit 2 bis 3 Kohlenstoff-Atomen bezeichnet, die durch ein oder zwei aus Halogen-Atomen, einer halogen-substituierten Phenyl-Gruppe und einer Alkylcarbamoyl-Gruppe ausgewählte Substituenten substituiert ist, oder

$R^{10}$ eine Pyridinyl-, Pyrimidinyl-, Pyridazinyl-, Chinoxalinyl, Isoxazolyl-oder Oxo-1,3,4,-thiadiazolyl-Gruppe bezeichnet, die durch ein bis drei gleiche oder verschiedene Alkyl-Gruppen, Alkoxy-Gruppen, Dialkylamino-Gruppen, die sämtlich jeweils 1 bis 4 Kohlenstoff-Atomen umfassen, Halogen-Atome oder Phenyl-Gruppen substituiert sind, oder

$R^9$ und $R^{10}$ zusammen einen Benzodioxaphosphorin-Ring bezeichnen oder

in dem Fall, in dem $X^4$ eine direkte Bindung zwischen dem Phosphor-Atom und $R^{10}$ bezeichnet,

$R^{10}$ die Gruppe $-\underset{OH}{CH}CCl_3$

bezeichnent.

5. Insektizide Zusammensetzung nach Anspruch 1, dadurch gekennzeichnet, daß in der aktiven Substanz-Kombination das Gewichtsverhältnis (1) der Nitromethylen-Verbindung zur der Verbindung der Gruppe (2) zwischen 1 : 0,05 und 1 : 10 liegt.

6. Insektizide Zusammensetzung nach Anspruch 1, dadurch gekennzeichnet, daß in der aktiven Substanz-Kombination das Gewichtsverhältnis (1) der Nitromethylen-Verbindung zur der Verbindung der Gruppe (3) zwischen 1 : 0,05 und 1 : 10 liegt.

7. Insektizide Zusammensetzung nach Anspruch 1, dadurch gekennzeichnet, daß in der aktiven Substanz-Kombination das Gewichtsverhältnis (1) der Nitromethylen-Verbindung zur der Verbindung der Gruppe (4) zwischen 1 : 0,1 und 1 : 20 liegt.

8. Insektizide Zusammensetzung nach Anspruch 1, dadurch gekennzeichnet, daß in der aktiven Substanz-Kombination das Gewichtsverhältnis (1) der Nitromethylen-Verbindung zur der Verbindung der Gruppe (5) zwischen 1 : 0,05 und 1 : 10 liegt.

9. Verfahren zur Bekämpfung von Schädlingen in Landwirtschaft und Gartenbau, dadurch gekennzeichnet, daß man eine aktive Substanz-Kombination nach den Ansprüchen 1 bis 8 auf die Schädlinge Insekten und/oder deren Lebensraum einwirken läßt.

10. Verwendung der aktiven Substanz-Kombination nach den Ansprüchen 1 bis 8 zur Bekämpfung von Schädlingen in Landwirtschaft und Gartenbau.

11. Verfahren zur Herstellung von insektiziden Mitteln, dadurch gekennzeichnet, daß eine aktive Substanz-Kombination nach den Ansprüchen 1 bis 8 mit Streckmitteln und/oder grenzflächenaktiven Mitteln vermischt wird.